# EUROPEAN PATENT APPLICATION

(11) **EP 4 580 166 A1**
(43) Date of publication of application: **02.07.2025**
(21) Application number: 23870428.2
(22) Date of filing: 18.09.2023
(51) Int. Cl.: H04L 67/60

(54) **COMMUNICATION METHOD, COMMUNICATION APPARATUS AND COMMUNICATION SYSTEM**

(30) Priority: 29.09.2022 CN 202211212806
(71) Applicant: Huawei Technologies Co., Ltd., Shenzhen, Guangdong 518129 (CN)
(72) Inventor: WANG, Yaxin, Shenzhen, Guangdong 518129 (CN); PAN, Qi, Shenzhen, Guangdong 518129 (CN); XU, Shengfeng, Shenzhen, Guangdong 518129 (CN); YANG, Yanmei, Shenzhen, Guangdong 518129 (CN)
(74) Representative: Gill Jennings & Every LLP
(86) International application number: PCT/CN2023/119350
(87) International publication number: WO 2024/067194

(57) **Abstract**

Embodiments of this application provide a communication method, a communication apparatus, and a communication system. The method may include: A service enabler architecture layer data delivery SEALDD server receives service request information from a terminal device, where the service request information is used to request the SEALDD server to provide a service related to data transmission. In response to the service request information, the SEALDD server transmits data of the terminal device to a user plane network element through an N6 tunnel, the N6 tunnel is established based on first information and second information, the first information includes information provided by the SEALDD server for establishing the N6 tunnel, and the second information includes information provided by the user plane network element for establishing the N6 tunnel. In this way, the N6 tunnel between the SEALDD server and the user plane network element is established, so that the SEALDD server can provide a service for the terminal device through the user plane network element.

## Description

This application claims priority to Chinese Patent Application No. 202211212806.8, filed with the China National Intellectual Property Administration on September 29, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the communication field, and more specifically, to a communication method, a communication apparatus, and a communication system.

### BACKGROUND

An application server may provide a service for a client through a core network. A service enabler architecture layer (service enabler architecture layer, SEAL) is used in an example. The SEAL may provide services for an application client and an application server by using a service enabler architecture layer data delivery (service enabler architecture layer data delivery, SEALDD) service architecture. The SEALDD service architecture may include, for example, an SEALDD server (SEALDD server) and an SEALDD client (SEALDD client). For example, when user plane data is transmitted, the application client may first send a data packet to the SEALDD client, the SEALDD client may send the received data packet to the SEALDD server through a user plane network element, and then the SEALDD server sends the data packet to the application server. Therefore, when the application server provides a service for the client through the core network, how to transmit data is a to-be-resolved problem.

### SUMMARY

This application provides a communication method, a communication apparatus, and a communication system. In this way, an association between an application server and a core network is established, so that the application server can provide a service for a client through the core network.

According to a first aspect, a communication method is provided. The method may be performed by a service enabler architecture layer data delivery (service enabler architecture layer data delivery, SEALDD) server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server receives service request information from a terminal device. The service request information is used to request the SEALDD server to provide a service related to data transmission. In response to the service request information, the SEALDD server transmits data of the terminal device to a user plane network element through an N6 tunnel. The N6 tunnel is established based on first information and second information, the first information includes information provided by the SEALDD server for establishing the N6 tunnel, and the second information includes information provided by the user plane network element for establishing the N6 tunnel.

According to the foregoing technical solution, the N6 tunnel between the SEALDD server and the user plane network element, for example, an N6 tunnel at a terminal granularity or a specific data transmission service granularity of a terminal, is established, so that the SEALDD server can provide a service for the terminal device through the user plane network element. Specifically, after receiving the service request information of the terminal device, the SEALDD server transmits the data of the terminal device to the user plane network element through the N6 tunnel between the SEALDD server and the user plane network element. The N6 tunnel may be determined by the SEALDD server based on the information provided by the SEALDD server for establishing the N6 tunnel and the information provided by the user plane network element for establishing the N6 tunnel.

With reference to the first aspect, in some implementations of the first aspect, the method further includes: The SEALDD server sends the first information to the user plane network element. The first information is used to trigger the user plane network element to establish the N6 tunnel. In response to the first information, the user plane network element transmits the data of the terminal device to the SEALDD server through the N6 tunnel.

According to the foregoing technical solution, the user plane network element may establish or configure the N6 tunnel based on the first information provided by the SEALDD server and the information provided by the user plane network element for establishing the N6 tunnel, and may transmit the data of the terminal device to the SEALDD server through the N6 tunnel.

With reference to the first aspect, in some implementations of the first aspect, that the SEALDD server sends the first information to the user plane network element includes: The SEALDD server sends the first information to the user plane network element when the SEALDD server determines, based on the service request information, to transmit the data of the terminal device on the N6 tunnel.

According to the foregoing technical solution, the SEALDD server may determine to provide the first information for the user plane network element when the N6 tunnel needs to be established or when the data of the terminal device needs to be transmitted on the N6 tunnel, to avoid a signaling waste caused by no need to establish the N6 tunnel.

With reference to the first aspect, in some implementations of the first aspect, the method further includes: The SEALDD server sends address information of the SEALDD server and/or port information of the SEALDD server to the terminal device.

According to the foregoing technical solution, the SEALDD server provides the address information of the SEALDD server and/or the port information of the SEALDD server for the terminal device, so that the terminal device can transmit data to the SEALDD server based on the address information and/or the port information.

With reference to the first aspect, in some implementations of the first aspect, that the SEALDD server transmits data of the terminal device to a user plane network element through an N6 tunnel includes: The SEALDD server receives a first data packet from an application server. The SEALDD server sends the first data packet to the user plane network element through the N6 tunnel based on address information and/or port information of the first data packet and a mapping relationship. The mapping relationship indicates a relationship among the SEALDD server, the application server, the terminal device, and the N6 tunnel.

With reference to the first aspect, in some implementations of the first aspect, the first data packet includes feature information of the first data packet.

With reference to the first aspect, in some implementations of the first aspect, that the SEALDD server transmits data of the terminal device to a user plane network element through an N6 tunnel includes: The SEALDD server receives a second data packet from the user plane network element through the N6 tunnel. The SEALDD server sends the second data packet to an application server based on address information and/or port information of the second data packet, the N6 tunnel, and a mapping relationship. The mapping relationship indicates a relationship among the SEALDD server, the application server, the terminal device, and the N6 tunnel.

With reference to the first aspect, in some implementations of the first aspect, the second data packet includes feature information of the second data packet.

According to a second aspect, a communication method is provided. The method may be performed by a user plane network element, or may be performed by a component (for example, a chip or a circuit) of the user plane network element. This is not limited herein. For ease of description, the following uses an example in which the method is performed by the user plane network element for description.

The method may include: The user plane network element receives first information from a service enabler architecture layer data delivery SEALDD server. The first information is used to trigger the user plane network element to establish an N6 tunnel, the N6 tunnel is established based on the first information and second information, the first information includes information provided by the SEALDD server for establishing the N6 tunnel, and the second information includes information provided by the user plane network element for establishing the N6 tunnel. In response to the first information, the user plane network element transmits data of a terminal device to the SEALDD server through the N6 tunnel.

According to the foregoing technical solution, the N6 tunnel between the SEALDD server and the user plane network element, for example, an N6 tunnel at a terminal granularity or a specific data transmission service granularity of a terminal, is established, so that the SEALDD server can provide a service for the terminal device through the user plane network element. Specifically, the user plane network element may establish the N6 tunnel between the SEALDD server and the user plane network element based on the information provided by the SEALDD server for establishing the N6 tunnel and the information provided by the user plane network element for establishing the N6 tunnel, and may transmit the data of the terminal device to the SEALDD server through the N6 tunnel.

With reference to the second aspect, in some implementations of the second aspect, that the user plane network element transmits data of a terminal device to the SEALDD server through the N6 tunnel includes: The user plane network element receives, from the SEALDD server, a first data packet from an application server through the N6 tunnel. The user plane network element sends the first data packet to the terminal device based on address information and/or port information of the first data packet and a mapping relationship. The mapping relationship indicates a relationship among the SEALDD server, the application server, the terminal device, and the N6 tunnel.

With reference to the second aspect, in some implementations of the second aspect, the first data packet includes feature information of the first data packet.

With reference to the second aspect, in some implementations of the second aspect, that the user plane network element transmits data of a terminal device to the SEALDD server through the N6 tunnel includes: The user plane network element receives a second data packet from the terminal device. The user plane network element sends the second data packet to the application server through the SEALDD server based on address information and/or port information of the second data packet, the N6 tunnel, and the mapping relationship. The mapping relationship indicates the relationship among the SEALDD server, the application server, the terminal device, and the N6 tunnel.

With reference to the second aspect, in some implementations of the second aspect, the second data packet includes feature information of the second data packet.

With reference to the first aspect or the second aspect, in some implementations, the first information includes at least one of the following: information about the terminal device, routing information of the N6 tunnel, address information of the SEALDD server, port information of the SEALDD server, and a tunnel endpoint identifier of the N6 tunnel on an SEALDD server side.

With reference to the first aspect or the second aspect, in some implementations, the second information includes at least one of the following: address information of the user plane network element, port information of the user plane network element, and a tunnel endpoint identifier of the N6 tunnel on a user plane network element side.

With reference to the first aspect or the second aspect, in some implementations, the first information includes information provided by the SEALDD server for establishing at least two N6 tunnels, the at least two N6 tunnels are N6 tunnels between the SEALDD server and the user plane network element, and the at least two N6 tunnels are used to transmit different types of data of the terminal device.

With reference to the first aspect or the second aspect, in some implementations, the first information includes importance information corresponding to each N6 tunnel.

According to a third aspect, a communication method is provided. The method may be performed by a session management network element, or may be performed by a component (for example, a chip or a circuit) of the session management network element. This is not limited herein. For ease of description, the following uses an example in which the method is performed by the session management network element for description.

The method may include: The session management network element determines second information. The second information includes information provided by a user plane network element for establishing an N6 tunnel, the N6 tunnel is an N6 tunnel between a service enabler architecture layer data delivery SEALDD server and the user plane network element, and the N6 tunnel is used to transmit data of a terminal device. The session management network element sends the second information to the SEALDD server. The second information is used to trigger the SEALDD server to establish the N6 tunnel.

According to the foregoing technical solution, the N6 tunnel between the SEALDD server and the user plane network element, for example, an N6 tunnel at a terminal granularity or a specific data transmission service granularity of a terminal, is established, so that the SEALDD server can provide a service for the terminal device through the user plane network element. Specifically, the user plane network element may provide, for the SEALDD server, the information provided by the user plane network element for establishing the N6 tunnel. In this way, the SEALDD server may determine the N6 tunnel based on the second information and information provided by the SEALDD server for establishing the N6 tunnel, and the SEALDD server may transmit the data of the terminal device to the user plane network element through the N6 tunnel.

With reference to the third aspect, in some implementations of the third aspect, the method further includes: The session management network element receives first information from the SEALDD server. The first information includes the information provided by the SEALDD server for establishing the N6 tunnel, and the first information is used to trigger the user plane network element to establish the N6 tunnel.

With reference to the third aspect, in some implementations of the third aspect, the method further includes: The session management network element sends the first information to the user plane network element.

According to the foregoing technical solution, the session management network element may send, to the user plane network element, the information provided by the SEALDD server for establishing the N6 tunnel. In this way, the user plane network element may determine the N6 tunnel.

With reference to the third aspect, in some implementations of the third aspect, the first information includes at least one of the following: information about the terminal device, routing information of the N6 tunnel, address information of the SEALDD server, port information of the SEALDD server, and a tunnel endpoint identifier of the N6 tunnel on an SEALDD server side.

With reference to the third aspect, in some implementations of the third aspect, that the session management network element determines second information includes: The session management network element allocates the second information to the user plane network element. Alternatively, the session management network element receives the second information from the user plane network element.

With reference to the third aspect, in some implementations of the third aspect, the second information includes at least one of the following: address information of the user plane network element, port information of the user plane network element, and a tunnel endpoint identifier of the N6 tunnel on a user plane network element side.

According to a fourth aspect, a communication method is provided. The method may be performed by an SEALDD server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server receives service request information from a terminal device. The service request information is used to request the SEALDD server to provide a service related to data transmission. When the SEALDD server determines that an N6 tunnel is not established between the SEALDD server and a user plane network element, the SEALDD server sends first information to the user plane network element. The first information is information provided by the SEALDD server for establishing the N6 tunnel, the user plane network element is a user plane network element that provides a service for the terminal device, and the first information is used to trigger the user plane network element to establish the N6 tunnel.

According to the foregoing technical solution, the N6 tunnel between the SEALDD server and the user plane network element, for example, an N6 tunnel at a user plane network element granularity, is established, so that the SEALDD server can provide a service for the terminal device through the user plane network element. Specifically, after receiving the service request information of the terminal device, the SEALDD server may first determine whether the SEALDD server establishes the N6 tunnel with the user plane network element that provides a service for the terminal device. If the SEALDD server determines that the SEALDD server does not establish the N6 tunnel with the user plane network element that provides a service for the terminal device, the SEALDD server sends the first information to the user plane network element, so that the user plane network element establishes the N6 tunnel with the SEALDD server.

With reference to the fourth aspect, in some implementations of the fourth aspect, the method further includes: The SEALDD server receives second information from the user plane network element. The second information is information provided by the user plane network element for establishing the N6 tunnel. The SEALDD server transmits data of the terminal device to the user plane network element through the N6 tunnel. The N6 tunnel is determined based on the first information and the second information.

According to the foregoing technical solution, the SEALDD server may receive the information provided by the user plane network element for establishing the N6 tunnel, to determine the N6 tunnel based on the information provided by the user plane network element for establishing the N6 tunnel and the information provided by the SEALDD server for establishing the N6 tunnel.

With reference to the fourth aspect, in some implementations of the fourth aspect, the method further includes: The SEALDD server sends address information of the SEALDD server and/or port information of the SEALDD server to the terminal device.

With reference to the fourth aspect, in some implementations of the fourth aspect, that the SEALDD server transmits data of the terminal device to the user plane network element through the N6 tunnel includes: The SEALDD server receives a first data packet from an application server. The SEALDD server sends the first data packet to the user plane network element through the N6 tunnel based on address information and/or port information of the first data packet and a mapping relationship. The mapping relationship indicates a relationship among the SEALDD server, the application server, the terminal device, and the N6 tunnel.

With reference to the fourth aspect, in some implementations of the fourth aspect, the first data packet includes feature information of the first data packet.

With reference to the fourth aspect, in some implementations of the fourth aspect, that the SEALDD server transmits data of the terminal device to the user plane network element through the N6 tunnel includes: The SEALDD server receives a second data packet from the user plane network element through the N6 tunnel. The SEALDD server sends the second data packet to an application server based on address information and/or port information of the second data packet, the N6 tunnel, and a mapping relationship. The mapping relationship indicates a relationship among the SEALDD server, the application server, the terminal device, and the N6 tunnel.

With reference to the fourth aspect, in some implementations of the fourth aspect, the second data packet includes feature information of the second data packet.

With reference to the fourth aspect, in some implementations of the fourth aspect, the first information includes at least one of the following: information about the terminal device, routing information of the N6 tunnel, address information of the SEALDD server, port information of the SEALDD server, and a tunnel endpoint identifier of the N6 tunnel on an SEALDD server side.

With reference to the fourth aspect, in some implementations of the fourth aspect, the second information includes at least one of the following: address information of the user plane network element, port information of the user plane network element, and a tunnel endpoint identifier of the N6 tunnel on a user plane network element side.

With reference to the fourth aspect, in some implementations of the fourth aspect, the first information includes information provided by the SEALDD server for establishing at least two N6 tunnels, the at least two N6 tunnels are N6 tunnels between the SEALDD server and the user plane network element, and the at least two N6 tunnels are used to transmit different types of data of the terminal device.

With reference to the fourth aspect, in some implementations of the fourth aspect, the first information includes importance information corresponding to each N6 tunnel.

According to a fifth aspect, a communication method is provided. The method may be performed by a terminal device, or may be performed by a component (for example, a chip or a circuit) of the terminal device. This is not limited herein. For ease of description, an example in which the method is performed by a policy control network element is used below for description.

The method may include: The terminal device receives information about a user plane network element from an SEALDD server. The user plane network element is a user plane network element that has established an N6 tunnel with the SEALDD server. The terminal device establishes a session with the user plane network element.

According to the foregoing technical solution, the N6 tunnel between the SEALDD server and the user plane network element, for example, an N6 tunnel at a user plane network element granularity, is established, so that the SEALDD server can provide a service for the terminal device through the user plane network element. Specifically, the terminal device may receive the information about the user plane network element provided by the SEALDD server. The user plane network element may be a user plane network element that has established the N6 tunnel with the SEALDD server. In this way, the terminal device may establish a session with the specific user plane network element, and the user plane network element provides a service.

With reference to the fifth aspect, in some implementations of the fifth aspect, the information about the user plane network element includes at least one of the following: port information of the user plane network element, address information of the user plane network element, a data network name of the user plane network element, and a network slice of the user plane network element.

With reference to the fifth aspect, in some implementations of the fifth aspect, before that the terminal device receives information about a user plane network element from an SEALDD server includes: The terminal device sends service request information to the SEALDD server. The service request information is used to request the SEALDD server to provide a service related to data transmission.

With reference to the fifth aspect, in some implementations of the fifth aspect, the method further includes: The terminal device sends information about the terminal device to the SEALDD server.

According to a sixth aspect, a communication method is provided. The method may be performed by an SEALDD server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server establishes an N6 tunnel with a user plane network element. The SEALDD server sends information about the user plane network element to a terminal device and/or an application server.

According to the foregoing technical solution, the N6 tunnel between the SEALDD server and the user plane network element, for example, an N6 tunnel at a user plane network element granularity, is established, so that the SEALDD server can provide a service for the terminal device through the user plane network element. Specifically, the SEALDD server establishes the N6 tunnel with the user plane network element in advance, and sends the information about the user plane network element to the terminal device and/or the application server, so that the user plane network element provides a service for the terminal device.

With reference to the sixth aspect, in some implementations of the sixth aspect, the information about the user plane network element includes at least one of the following: port information of the user plane network element, address information of the user plane network element, a data network name of the user plane network element, and a network slice of the user plane network element.

With reference to the sixth aspect, in some implementations of the sixth aspect, before that the SEALDD server sends information about the user plane network element to a terminal device, the method further includes: The SEALDD server receives service request information from the terminal device. The service request information is used to request the SEALDD server to provide a service related to data transmission.

With reference to the sixth aspect, in some implementations of the sixth aspect, the method further includes: The SEALDD server receives information from the terminal device. The SEALDD server determines a mapping relationship based on the information about the terminal device. The mapping relationship indicates a relationship among the SEALDD server, the terminal device, the application server, and the N6 tunnel.

With reference to the sixth aspect, in some implementations of the sixth aspect, the method further includes: The SEALDD server transmits data of the terminal device to the user plane network element based on the mapping relationship through the N6 tunnel.

According to a seventh aspect, a communication method is provided. The method may be performed by a session management network element, or may be performed by a component (for example, a chip or a circuit) of the session management network element. This is not limited herein. For ease of description, the following uses an example in which the method is performed by the session management network element for description.

The method may include: The session management network element determines that a terminal device sends data to an SEALDD server. The session management network element obtains information about an N6 tunnel. The information about the N6 tunnel includes information about the N6 tunnel established between the SEALDD server and a user plane network element. The session management network element determines a traffic diversion point based on the information about the N6 tunnel. The traffic diversion point is configured to divert data of the terminal device to the user plane network element.

According to the foregoing technical solution, the N6 tunnel between the SEALDD server and the user plane network element, for example, an N6 tunnel at a user plane network element granularity, is established, so that the SEALDD server can provide a service for the terminal device through the user plane network element. Specifically, the SEALDD server establishes the N6 tunnel with the user plane network element in advance, and the session management network element obtains the information about the N6 tunnel. When detecting that the terminal device sends data to the SEALDD server, the session management network element determines the traffic diversion point based on the information about the N6 tunnel, to divert the data of the terminal device to the user plane network element.

With reference to the seventh aspect, in some implementations of the seventh aspect, the method further includes: The session management network element sends information about the terminal device and indication information to the SEALDD server. The indication information indicates the information about the N6 tunnel established between the SEALDD server and the user plane network element.

With reference to the seventh aspect, in some implementations of the seventh aspect, the information about the N6 tunnel includes at least one of the following: N6 tunnel information on an SEALDD server side, port information of a data packet corresponding to the N6 tunnel, and address information of the data packet corresponding to the N6 tunnel.

According to an eighth aspect, a communication method is provided. The method may be performed by an SEALDD server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server establishes an N6 tunnel with a user plane network element. The SEALDD server sends information about the N6 tunnel to a session management network element.

According to the foregoing technical solution, the N6 tunnel between the SEALDD server and the user plane network element, for example, an N6 tunnel at a user plane network element granularity, is established, so that the SEALDD server can provide a service for a terminal device through the user plane network element. Specifically, the SEALDD server establishes the N6 tunnel with the user plane network element in advance, and sends the information about the N6 tunnel to the session management network element. In this way, the session management network element may determine a traffic diversion point, to divert data of the terminal device to the user plane network element.

With reference to the eighth aspect, in some implementations of the eighth aspect, the method further includes: The SEALDD server receives information about the terminal device and indication information from the session management network element. The indication information indicates the information about the N6 tunnel established between the SEALDD server and the user plane network element. The SEALDD server determines a mapping relationship based on the information about the terminal device and the indication information. The mapping relationship indicates a relationship among the SEALDD server, the terminal device, the application server, and the N6 tunnel.

With reference to the eighth aspect, in some implementations of the eighth aspect, the method further includes: The SEALDD server transmits the data of the terminal device to the user plane network element based on the mapping relationship through the N6 tunnel.

With reference to the eighth aspect, in some implementations of the eighth aspect, the method further includes: The SEALDD server receives service request information from the terminal device. The service request information is used to request the SEALDD server to provide a service related to data transmission. The SEALDD server sends address information of the SEALDD server and/or port information of the SEALDD server to the terminal device.

With reference to the eighth aspect, in some implementations of the eighth aspect, that the SEALDD server sends address information of the SEALDD server and/or port information of the SEALDD server to the terminal device includes: When the SEALDD server determines, based on the service request information, to transmit the data of the terminal device on the N6 tunnel, the SEALDD server sends the address information of the SEALDD server and/or the port information of the SEALDD server to the terminal device.

With reference to the eighth aspect, in some implementations of the eighth aspect, the information about the N6 tunnel includes at least one of the following: N6 tunnel information on an SEALDD server side, port information of a data packet corresponding to the N6 tunnel, and address information of the data packet corresponding to the N6 tunnel.

According to a ninth aspect, a communication method is provided. The method may be performed by a session management network element, or may be performed by a component (for example, a chip or a circuit) of the session management network element. This is not limited herein. For ease of description, the following uses an example in which the method is performed by the session management network element for description.

The method may include: The session management network element, determines that a terminal device sends data to an SEALDD server. The session management network element sends request information to a first user plane network element. The request information is used to request information about an N6 tunnel, the N6 tunnel is an N6 tunnel between the SEALDD server and the first user plane network element, and the first user plane network element is a user plane network element that provides a service for the terminal device. The session management network element receives second information from the first user plane network element. The second information is information provided by the first user plane network element for establishing the N6 tunnel. The session management network element sends the second information to the SEALDD server. The second information is used to trigger the SEALDD server to establish the N6 tunnel.

According to the foregoing technical solution, the N6 tunnel between the SEALDD server and the user plane network element, for example, an N6 tunnel at a user plane network element granularity, is established, so that the SEALDD server can provide a service for the terminal device through the user plane network element. Specifically, when determining that the terminal device sends the data to the SEALDD server, the session management network element may request the second information from the user plane network element that provides a service for the terminal device, and send the second information to the SEALDD server, so that the SEALDD server may determine the N6 tunnel based on the second information and information provided by the SEALDD server for establishing the N6 tunnel.

With reference to the ninth aspect, in some implementations of the ninth aspect, the method further includes: The session management network element obtains information about at least one N6 tunnel. The information about the at least one N6 tunnel includes information about an N6 tunnel established between the SEALDD server and at least one user plane network element. That the session management network element sends request information to a first user plane network element includes: When the session management network element determines that the at least one user plane network element does not include the first user plane network element, the session management network element sends the request information to the first user plane network element.

According to the foregoing technical solution, when determining that the first user plane network element has not established the N6 tunnel with the SEALDD server, the SMF sends the request message to the SEALDD server.

With reference to the ninth aspect, in some implementations of the ninth aspect, that the session management network element obtains information about at least one N6 tunnel includes: The session management network element receives the information about the at least one N6 tunnel from the SEALDD server.

With reference to the ninth aspect, in some implementations of the ninth aspect, the information about the at least one N6 tunnel includes at least one of the following: N6 tunnel information on an SEALDD server side, port information of a data packet corresponding to the at least one N6 tunnel, and address information of the data packet corresponding to the at least one N6 tunnel.

With reference to the ninth aspect, in some implementations of the ninth aspect, the method further includes: When the session management network element determines that the at least one user plane network element does not include the first user plane network element, the session management network element further sends information about the terminal device to the SEALDD server.

With reference to the ninth aspect, in some implementations of the ninth aspect, the method further includes: When the session management network element determines that the at least one user plane network element includes the first user plane network element, the session management network element sends information about the terminal device and indication information to the SEALDD server. The indication information indicates the information about the N6 tunnel established between the SEALDD server and the first user plane network element.

With reference to the ninth aspect, in some implementations of the ninth aspect, the second information includes at least one of the following: address information of the first user plane network element, port information of the first user plane network element, and a tunnel endpoint identifier of the N6 tunnel on a first user plane network element side.

According to a tenth aspect, a communication method is provided. The method may be performed by an SEALDD server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server determines information about at least one N6 tunnel. The information about the at least one N6 tunnel includes information about an N6 tunnel established between the SEALDD server and at least one user plane network element. The SEALDD server sends the information about the at least one N6 tunnel to a session management network element.

According to the foregoing technical solution, the N6 tunnel between the SEALDD server and the user plane network element, for example, an N6 tunnel at a user plane network element granularity, is established, so that the SEALDD server can provide a service for a terminal device through the user plane network element. Specifically, the SEALDD server establishes the N6 tunnel with the user plane network element in advance, and sends the information about the N6 tunnel to the session management network element, so that the session management network element may determine whether the SEALDD server establishes the N6 tunnel with a specific user plane network element.

With reference to the tenth aspect, in some implementations of the tenth aspect, the information about the at least one N6 tunnel includes at least one of the following: N6 tunnel information on an SEALDD server side, port information of a data packet corresponding to the at least one N6 tunnel, and address information of the data packet corresponding to the at least one N6 tunnel.

According to an eleventh aspect, a communication method is provided. The method may be performed by an SEALDD server, or may be performed by a component (for example, a chip or a circuit) of the SEALDD server. This is not limited herein. For ease of description, the following uses an example in which the method is performed by the SEALDD server for description.

The method may include: The service enabler architecture layer data delivery SEALDD server receives a service request information from a terminal device. The service request information is used to request the SEALDD server to provide a service related to data transmission. The SEALDD server sends third information to the terminal device. The third information indicates information about at least one SEALDD connection between the SEALDD server and the terminal device.

Optionally, the method further includes: The SEALDD server transmits data of the terminal device based on the information about the at least one SEALDD connection.

According to the foregoing technical solution, a tunnel or an SEALDD connection between the SEALDD server and the terminal device is established, so that the SEALDD server can provide a service for the terminal device through a core network. Specifically, after receiving the service request information of the terminal device, the SEALDD server provides, for the terminal device, the information about the at least one SEALDD connection between the SEALDD server and the terminal device, so that the terminal device can transmit data based on the at least one SEALDD connection.

With reference to the eleventh aspect, in some implementations of the eleventh aspect, the information about the at least one SEALDD connection includes at least one of the following: address information of each SEALDD connection, port information of each SEALDD connection, importance information of each SEALDD connection, and identification information of each SEALDD connection.

With reference to the eleventh aspect, in some implementations of the eleventh aspect, the method further includes: The SEALDD server receives requirement information from an application server. The requirement information is used to request the SEALDD server to provide a service for the application server. The SEALDD server establishes the at least one SEALDD connection based on the requirement information. The at least one SEALDD connection is used to transmit data of the application server.

With reference to the eleventh aspect, in some implementations of the eleventh aspect, the method further includes: The SEALDD server transmits the data of the application server on the at least one SEALDD connection with the terminal device based on a mapping relationship. The mapping relationship indicates a relationship among the SEALDD server, the application server, the terminal device, and the at least one SEALDD connection.

According to a twelfth aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method may include: The terminal device sends service request information to a SEALDD server. The service request information is used to request the SEALDD server to provide a service related to data transmission. The terminal device receives third information from the SEALDD server. The third information indicates information about at least one SEALDD connection between the SEALDD server and the terminal device.

Optionally, the terminal device sends data to the SEALDD server based on the information about the at least one SEALDD connection.

According to the foregoing technical solution, an SEALDD connection or a tunnel between the SEALDD server and the terminal device is established, so that the SEALDD server can provide a service for the terminal device through a core network. Specifically, the terminal device receives the information about the at least one SEALDD connection from the SEALDD server. In this way, when data needs to be transmitted, the terminal device may transmit data based on the information about the at least one SEALDD connection.

With reference to the twelfth aspect, in some implementations of the twelfth aspect, the information about the at least one SEALDD connection includes at least one of the following: address information of each SEALDD connection, port information of each SEALDD connection, importance information of each SEALDD connection, and identification information of each SEALDD connection.

With reference to the twelfth aspect, in some implementations of the twelfth aspect, the method further includes: The SEALDD server receives requirement information from an application server. The requirement information is used to request the SEALDD server to provide a service for the application server. The SEALDD server establishes the at least one SEALDD connection based on the requirement information. The at least one SEALDD connection is used to transmit data of the application server.

With reference to the twelfth aspect, in some implementations of the twelfth aspect, the method further includes: The SEALDD server transmits the data of the application server on the at least one SEALDD connection with the terminal device based on a mapping relationship. The mapping relationship indicates a relationship among the SEALDD server, the application server, the terminal device, and the at least one SEALDD connection.

According to a thirteenth aspect, a communication method is provided. The method may be performed by a communication system, or may be performed by a component (for example, a chip or a circuit) of the communication system. This is not limited herein. For ease of description, the following uses an example in which the method is performed by the communication system for description. In an example, the communication system may include a user plane network element and an SEALDD server.

The method may include: The SEALDD server receives a first data packet from an application server. The SEALDD server sends the first data packet to the user plane network element through an N6 tunnel. The user plane network element sends the first data packet to a terminal device.

Optionally, the SEALDD server sends the first data packet to the user plane network element through the N6 tunnel based on address information and/or port information of the first data packet and a mapping relationship. The mapping relationship indicates a relationship among the SEALDD server, the application server, the terminal device, and the N6 tunnel.

According to a fourteenth aspect, a communication method is provided. The method may be performed by a communication system, or may be performed by a component (for example, a chip or a circuit) of the communication system. This is not limited herein. For ease of description, the following uses an example in which the method is performed by the communication system for description. In an example, the communication system may include a user plane network element and an SEALDD server.

The method may include: The SEALDD server receives a second data packet from a terminal device from the user plane network element through an N6 tunnel. The SEALDD server sends the second data packet to an application server.

Optionally, the SEALDD server sends the second data packet to the application server based on address information and/or port information of the second data packet and a mapping relationship through the N6 tunnel. The mapping relationship indicates a relationship among the SEALDD server, the application server, the terminal device, and the N6 tunnel.

With reference to the thirteenth aspect or the fourteenth aspect, in some implementations, the SEALDD server is the SEALDD server according to any one of the first aspect to the tenth aspect.

With reference to the thirteenth aspect or the fourteenth aspect, in some implementations, the user plane network element is the user plane network element according to any one of the first aspect to the tenth aspect.

According to a fifteenth aspect, a communication apparatus is provided. The apparatus is configured to perform the method provided in any one of the first aspect to the fourteenth aspect. Specifically, the apparatus may include a unit and/or a module configured to perform the method according to any implementation of any one of the first aspect to the fourteenth aspect, for example, a processing unit and/or a communication unit.

In an implementation, the apparatus is a communication device (for example, an SEALDD server, a session management network element, a user plane network element, or a terminal device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixteenth aspect, a communication apparatus is provided. The apparatus includes: a memory, configured to store a program; and at least one processor, configured to execute a computer program or instructions stored in the memory, to perform the method according to any implementation of any one of the first aspect to the fourteenth aspect.

In an implementation, the apparatus is a communication device (for example, an SEALDD server, a session management network element, a user plane network element, or a terminal device).

In another implementation, the apparatus is a chip, a chip system, or a circuit used in a communication device.

According to a seventeenth aspect, this application provides a processor, configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighteenth aspect, a computer-readable storage medium is provided. The computer-readable medium stores program code to be executed by a device, and the program code is used to perform the method according to any implementation of any one of the first aspect to the fourteenth aspect.

According to a nineteenth aspect, a computer program product including instructions is provided. When the computer program product runs on a computer, the computer is enabled to perform the method according to any implementation of any one of the first aspect to the fourteenth aspect.

According to a twentieth aspect, a chip is provided. The chip includes a processor and a communication interface. The processor reads, through the communication interface, instructions stored in a memory, to perform the method according to any implementation of any one of the first aspect to the fourteenth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any implementation of any one of the first aspect to the fourteenth aspect.

According to a twenty-first aspect, a communication system is provided, including one or more of the foregoing SEALDD server, user plane network element, session management network element, and terminal device.

### BRIEF DESCRIPTION OF DRAWINGS

FIG. 1 is a diagram of a network architecture applicable to an embodiment of this application;
FIG. 2 is another diagram of a network architecture applicable to an embodiment of this application;
FIG. 3 is another diagram of a network architecture applicable to an embodiment of this application;
FIG. 4 is a diagram of an architecture applicable to a solution A according to an embodiment of this application;
FIG. 5 is a diagram of a data packet transmitted based on a solution A according to an embodiment of this application;
FIG. 6 is a diagram of an architecture applicable to a solution B according to an embodiment of this application;
FIG. 7 is a diagram of a data packet transmitted based on a solution B according to an embodiment of this application;
FIG. 8 is a diagram of a communication method 800 according to an embodiment of this application;
FIG. 9 is a schematic flowchart of a communication method 900 according to an embodiment of this application;
FIG. 10 is a diagram of a communication method 1000 according to another embodiment of this application;
FIG. 11 is a schematic flowchart of a communication method 1100 according to another embodiment of this application;
FIG. 12 is a diagram of a communication method 1200 according to another embodiment of this application;
FIG. 13 is a schematic flowchart of a communication method 1300 according to another embodiment of this application;
FIG. 14 is a diagram of a communication method 1400 according to another embodiment of this application;
FIG. 15 is a schematic flowchart of a communication method 1500 according to another embodiment of this application;
FIG. 16 is a diagram of a communication method 1600 according to another embodiment of this application;
FIG. 17 is a schematic flowchart of a communication method 1700 according to another embodiment of this application;
FIG. 18 is a diagram of a communication method 1800 according to another embodiment of this application;
FIG. 19 is a schematic flowchart of a communication method 1900 according to another embodiment of this application;
FIG. 20 is a block diagram of a communication apparatus 2000 according to an embodiment of this application;
FIG. 21 is a block diagram of a communication apparatus 2100 according to an embodiment of this application; and
FIG. 22 is a block diagram of a chip system 2200 according to an embodiment of this application.

### DESCRIPTION OF EMBODIMENTS

The following describes technical solutions of embodiments in this application with reference to accompanying drawings.

The technical solutions in embodiments of this application are applicable to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application are also applicable to a future communication system, for example, a 6th generation mobile communication system. The technical solutions in embodiments of this application may be further applicable to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

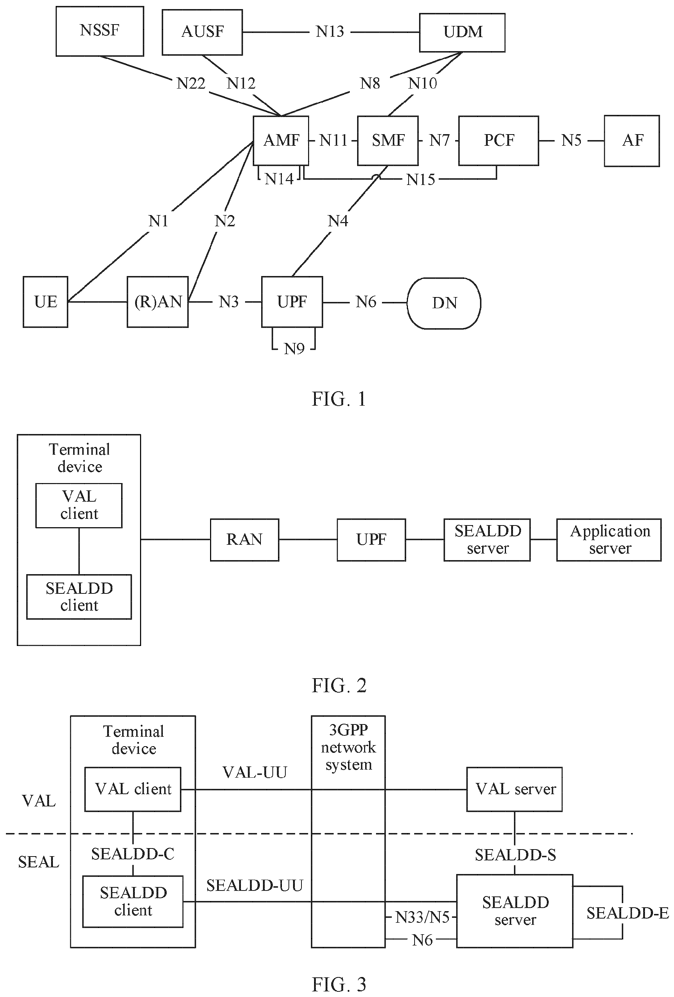

For ease of understanding embodiments of this application, communication systems applicable to embodiments of this application are first described in detail with reference to FIG. 1 to FIG. 3.

FIG. 1 is a diagram of a network architecture applicable to an embodiment of this application. As shown in FIG. 1, the network architecture may include, for example, but is not limited to, a user equipment (user equipment, UE), an access network (access network, AN), an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF), a data network (data network, DN), a network slice selection function (network slice selection function, NSSF) network element, and an authentication service function (authentication server function, AUSF) network element.

The following briefly describes the network elements shown in FIG. 1.
1. The UE may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, a terminal device in a 5G network, and a terminal device in a future evolved public land mobile network (public land mobile network, PLMN). This is not limited in embodiments of this application.

By way of example and not limitation, in embodiments of this application, the terminal device may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

In addition, the terminal device may alternatively include an intelligent printer, a train detector, a gas station, and another sensor, and main functions of the terminal device include collecting data (for some terminal devices), receiving control information and downlink data of a network device, sending an electromagnetic wave, and transmitting uplink data to the network device.

It should be understood that the terminal device may be any device that can access a network. The terminal device may communicate with an access network device by using an air interface technology (for example, an NR technology or an LTE technology). Terminal devices may also communicate with each other by using an air interface technology (for example, an NR technology or an LTE technology).

Optionally, the UE may serve as a base station. For example, the UE may serve as a scheduling entity that provides a sidelink signal between UEs in V2X, D2D, or the like. For example, a cellular phone and an automobile communicate with each other via a sidelink signal. The cellular phone communicates with a smart home device without relaying a communication signal by a base station.

In embodiments of this application, an apparatus configured to implement a function of the terminal device may be a terminal device; or may be an apparatus that can support the terminal device in implementing the function, for example, a chip system or a chip. The apparatus may be installed in the terminal device. In embodiments of this application, the chip system may include a chip, or may include a chip and another discrete component.

2. A (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), code division multiple access (code division multiple access, CDMA), and the like. The AN device may allow interconnection and interworking performed between the terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next generation 6G communication system. A specific technology and a specific device form that are used by the AN device are not limited in embodiments of this application.

The access network may provide a service for a cell. The terminal device may communicate with the cell through the transmission resource (for example, a frequency domain resource or a spectrum resource) allocated by the access network device.

3. The AMF network element is mainly for functions such as access control, mobility management, and attachment and detachment.

4. The SMF network element is mainly used for user plane network element selection, user plane network element redirection, internet protocol (internet protocol, IP) address assignment for a terminal device, and session management in a mobile network, for example, session establishment, modification, and release, and QoS control.

5. The UPF network element is mainly used for receiving and forwarding user plane data. For example, the UPF may receive user plane data from the DN, and send the user plane data to the terminal device by using the AN device. The UPF may alternatively receive user plane data from the terminal device by using the AN device, and forward the user plane data to the DN. A UPF directly connected to the DN through N6 in a session is referred to as a protocol data unit (protocol data unit, PDU) session anchor (PDU session anchor, PSA).

6. The PCF network element is mainly used for providing a service for a 3GPP network, for example, interacting with the PCF to perform policy control.

7. The AF network element mainly supports interaction with the 3GPP core network to provide a service, for example, affecting a data routing decision, interacting with the policy control function (PCF), or providing a third party for a network side.

8. The UDM network element may be used for subscription data management of the UE, including storage and management of a UE identifier, access authorization of the UE, and the like.

9. The data network (DN) is an operator network that is mainly used to provide a data service for a UE, for example, the internet (Internet), a third-party service network, or an IP multi-media service (IP multi-media service, IMS) network.

10. The AUSF network element is mainly used for user authentication and the like.

FIG. 2 is another diagram of a network architecture applicable to an embodiment of this application. In this network architecture, a service enabler architecture layer (service enabler architecture layer, SEAL) may provide services for an application client and an application server. In an example, the SEAL may provide services for the application client and the application server by using a service enabler architecture layer data delivery (service enabler architecture layer data delivery, SEALDD) service architecture. The SEALDD service architecture may include, for example, an SEALDD server (SEALDD server) and an SEALDD client (SEALDD client). The SEALDD client and the application client may be used as a part of the terminal device, and run on the terminal device in a form of software or a system component. The SEALDD server may be deployed between the UPF and the application server in a form of a standalone or integrated server. In actual deployment, a plurality of SEALDD servers may be further deployed in a distributed manner based on deployment statuses of the UPF and the application server.

In embodiments of this application, the application client may be, for example, a vertical application layer (vertical application layer, VAL) client (VAL client), and the application server may be, for example, a VAL server (VAL server). For ease of understanding, an example in which the client is a VAL client and the application server is a VAL server is used below for description.

FIG. 3 is another diagram of a network architecture applicable to an embodiment of this application. The network architecture shows a structure status of an interface between the service enabler architecture layer and the vertical application layer. As shown in FIG. 3, at least one SEALDD client may be deployed in the terminal device, and at least one VAL client may be further deployed in the terminal device. The SEALDD client may communicate with the VAL client through an SEALDD-C interface, and the SEALDD server may communicate with the VAL server through an SEALDD-S interface. The SEALDD client and the SEALDD server may perform user plane data transmission between each other through an SEALDD-UU interface, and the SEALDD-UU interface is carried on a user plane session established by a 3GPP network system. SEALDD servers may communicate with each other through an SEALDD-E interface, for example, perform control plane context transmission and user plane data forwarding.

As shown in FIG. 3, the SEALDD server may further communicate with the 3GPP network system through an N33/N5 interface. Specifically, the SEALDD server may communicate with the PCF through the N33/N5 interface for a control plane message, to send an AF request or perform notification subscription to a 5GC. The N5 interface is an interface between the AF and the PCF, the N33 interface is an interface between the AF and the NEF, and the AF may communicate with the PCF by using the NEF. The SEALDD server may further perform user plane data transmission with the UPF through the N6 interface. The SEALDD servers may further communicate with each other through the SEALDD-E interface, for example, perform control plane context transmission and user plane data forwarding.

The architecture shown in FIG. 3 is used in an example. When user plane data is transmitted, for uplink transmission, the VAL client first sends a data packet to the SEALDD client, the SEALDD client may encapsulate the received data packet and send the encapsulated data packet to the SEALDD server, and then the SEALDD server parses the encapsulated data packet and sends the encapsulated data packet to the VAL server. Correspondingly, for downlink transmission, data sent by the VAL server may be finally sent to the VAL client by using the SEALDD server and the SEALDD client.

In the network architectures shown in FIG. 1 to FIG. 3, the network elements may communicate with each other through interfaces. For example, the UE is connected to the AN device by using the radio resource control (radio resource control, RRC) protocol, and the UE communicates with the AN device through a Uu interface. Alternatively, refer to the interfaces shown in FIG. 1 to FIG. 3. Details are not described herein again. In addition, names of interfaces between the network elements in FIG. 1 and FIG. 3 are merely examples. During specific implementation, the names of the interfaces may be other names. This is not specifically limited in this application.

It should be understood that the foregoing network architectures applicable to embodiments of this application are merely examples for description, and a network architecture applicable to embodiments of this application is not limited thereto. Any network architecture that can implement functions of the foregoing network elements is applicable to embodiments of this application. In addition, the network architectures shown above may further include more other network elements. This is not limited herein.

It should be further understood that the network elements such as the AMF, the SMF, the UPF, the PCF, and the UDM shown in FIG. 1 to FIG. 3 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that functions or network elements such as the AMF, the SMF, the UPF, the PCF, the UDM, the NSSF, and the AUSF shown in FIG. 1 and FIG. 3 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the names are defined merely for ease of distinguishing between different functions, and should not constitute any limitation on this application. This application does not exclude a possibility of using other names in a 6G network and another future network. For example, in the 6G network, some or all of the network elements may still use terms in 5G, or may use other names.

The SEALDD server may provide a QoS guarantee service for the VAL. A media stream is used in an example. The media stream is generally transmitted in a form of a video frame. Each video frame may be split into a plurality of RTP data packets, and each video frame may be further classified into types such as an I-frame, a B-frame, and a P-frame. The media stream is, for example, a data stream of a real-time transport protocol (real-time transport protocol, RTP).

The I-frame is an intra-coded frame (intra-coded frame). The I-frame uses a spatial correlation within a single frame of image, but does not use a temporal correlation between frames. Because the I-frame includes a complete frame of image information, the I-frame may be used as a random access point, and is a reference frame for decoding. In addition, a compression ratio of the I-frame is low.

The P-frame is a forward predictive-coded frame (predictive-coded frame). The P-frame records a difference between a current frame and a previous frame. During decoding, information about a previous I-frame or P-frame is used to generate a complete image.

The B-frame is a bidirectionally predictive frame (bidirectionally predicted frame). The B-frame records a difference between a current frame and previous and next frames. During decoding, a previous I-frame or P-frame and a next P-frame are used to generate a complete image. A compression ratio can be improved by using the B-frame.

Currently, requirements for a video service are mainly as follows: (1) The UPF needs to identify which data packets belong to a same PDU set (PDU set) and an end point of the PDU set. (2) The UPF needs to distinguish importance of data packets in different PDU sets. (3) The UPF labels an N3 data packet based on the foregoing information, and sends the foregoing information to the RAN, so that the RAN performs targeted optimization scheduling. (4) Data packets of different importance are sent on different QoS flows (QoS flows). The RAN can schedule the data packets in a targeted manner, and does not need to perform detection and classification packet by packet.

To implement the foregoing requirements, the UPF needs to be able to learn some information about a current data packet. For differentiation, the information is marked as feature information of the data packet. After obtaining the feature information of the data packet, the UPF labels a data packet header of a general packet radio service (general packet radio service, GPRS) user plane part (user plane part of GTP, GTP-U) (that is, carries the feature information of the data packet in a GTP-U data packet header), and notifies the RAN of the label, so that the RAN performs parsing and performs targeted scheduling optimization.

The feature information of the data packet may represent information that can indicate a data packet correlation or a data frame correlation. In an example, a plurality of data packets may form one data frame. For example, the feature information of the data packet may indicate an association of a plurality of data packets or an association of a data frame (for example, an association relationship or a dependency relationship between a plurality of data frames). For example, the feature information of the data packet includes, for example, information such as a frame type of a current data packet and which data packets belong to a same data frame. The feature information of the data packet may further indicate importance of the data packet or the data frame. In an example, the feature information of the data packet may be, for example, media stream information of the data packet, or may be other information, which is not limited. In addition, the feature information of the data packet may further include other information related to the data packet, for example, information such as a timestamp and a data packet number. This is not limited herein. It may be understood that feature information of data packets mentioned in embodiments of this application, such as feature information of a first data packet and feature information of a second data packet, is similar, and details are not described below.

This application provides two solutions: a solution A and a solution B.

Solution A: An N6 tunnel (N6 tunnel) is established between the SEALDD server and the UPF. Based on the solution A, the N6 tunnel is established between the SEALDD server and the UPF. The SEALDD server transmits a data packet to the UPF through the N6 tunnel, and may add feature information of the data packet to an N6 tunnel header.

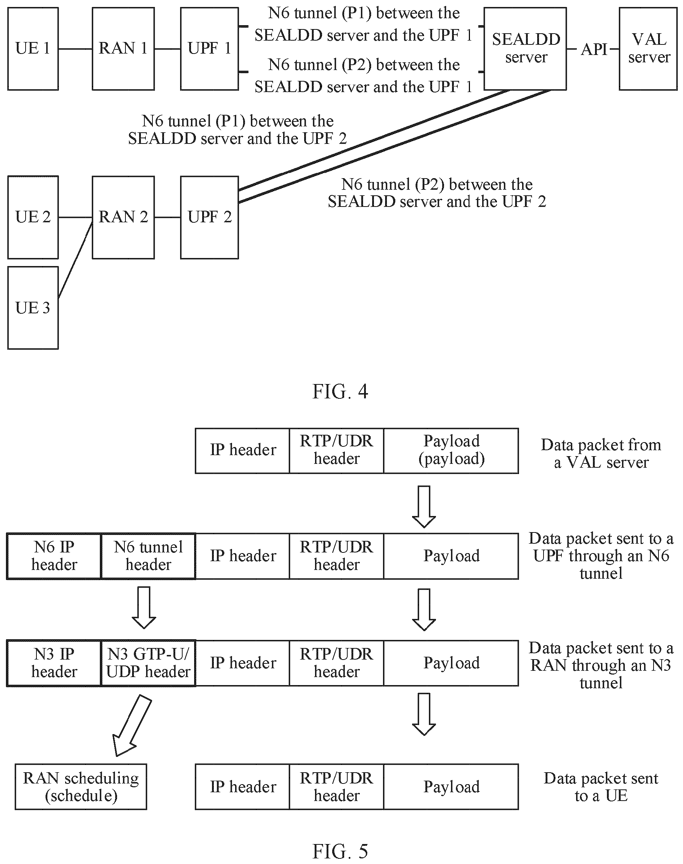

FIG. 4 is a diagram of an architecture applicable to the solution A according to an embodiment of this application. As shown in FIG. 4, the SEALDD server establishes an N6 tunnel for the VAL server. After receiving a data packet of the VAL server and parsing feature information of the data packet through an application programming interface (application programing interface, API), the SEALDD server labels the feature information of the data packet on the N6 tunnel, and notifies the UPF of the label. After receiving the label, the UPF may directly parse the label, and attach the label to an N3 tunnel, and notify the RAN of the label. As shown in FIG. 4, a plurality of N6 tunnels may be established between the SEALDD server and the UPF. The plurality of N6 tunnels may be used to transmit different data streams, for example, transmit data streams of different importance, so that the UPF may perform distinguishing between the different data streams, and may map the different data streams to different QoS flows for transmission.

FIG. 5 is a diagram of a data packet transmitted based on the solution A according to an embodiment of this application. As shown in FIG. 5, an N6 IP header (N6 IP header) and an N6 tunnel header (N6 tunnel header) are added to a data packet sent by the SEALDD server to the UPF through the N6 tunnel. In this way, the SEALDD server may send the data packet to the UPF through the N6 tunnel. The N6 tunnel header may include feature information of the data packet. In a data packet sent by the UPF to the RAN, the original N6 IP header is replaced with an N3 IP header, and the N6 tunnel header is replaced with an N3 tunnel header. In this way, the UPF may send the data packet to the RAN through the N3 tunnel.

Optionally, the solution A includes the following several implementations.

Implementation 1: The SEALDD server triggers establishment of an N6 tunnel at a UE granularity.

Implementation 2: An N6 tunnel at a UPF granularity is dynamically configured between the SEALDD server and the UPF.

Implementation 3: An N6 tunnel is pre-configured between the SEALDD server and the UPF.

The foregoing three implementations are described in detail below.

Solution B: An SEALDD connection (or referred to as an SEALDD tunnel) is established between the SEALDD server and the SEALDD client. Based on the solution B, the SEALDD connection is established between the SEALDD server and the SEALDD client, and the SEALDD server transmits data to the SEALDD client through the SEALDD connection, and may carry feature information of a data packet in a data header.

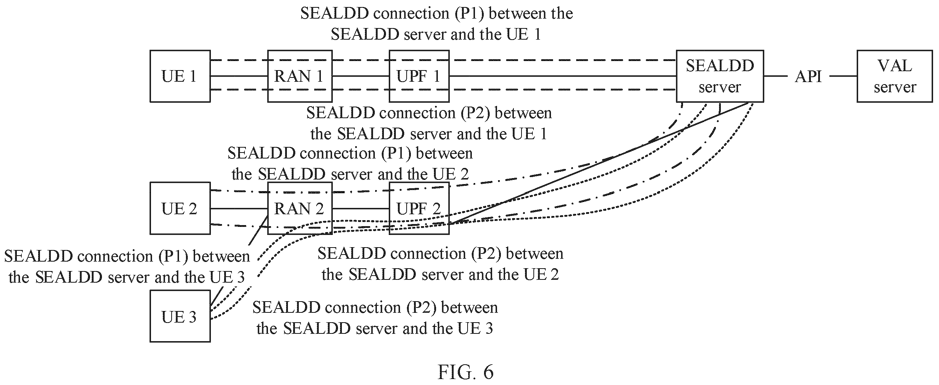

FIG. 6 is a diagram of an architecture applicable to the solution B according to an embodiment of this application. As shown in FIG. 6, a UE granularity (per UE) encapsulation protocol (for example, a GTP-U protocol) may be used between the SEALDD server and the SEALDD client. Both the SEALDD server and the SEALDD client may label a data stream header on the SEALDD connection, for parsing by the UPF. As shown in FIG. 6, a plurality of SEALDD connections may be established between the SEALDD server and the SEALDD client. The plurality of SEALDD connections may be used to transmit different data streams, for example, transmit data streams of different importance, so that the UPF may perform distinguishing between the different data streams, and may map the data streams to different QoS flows for transmission.

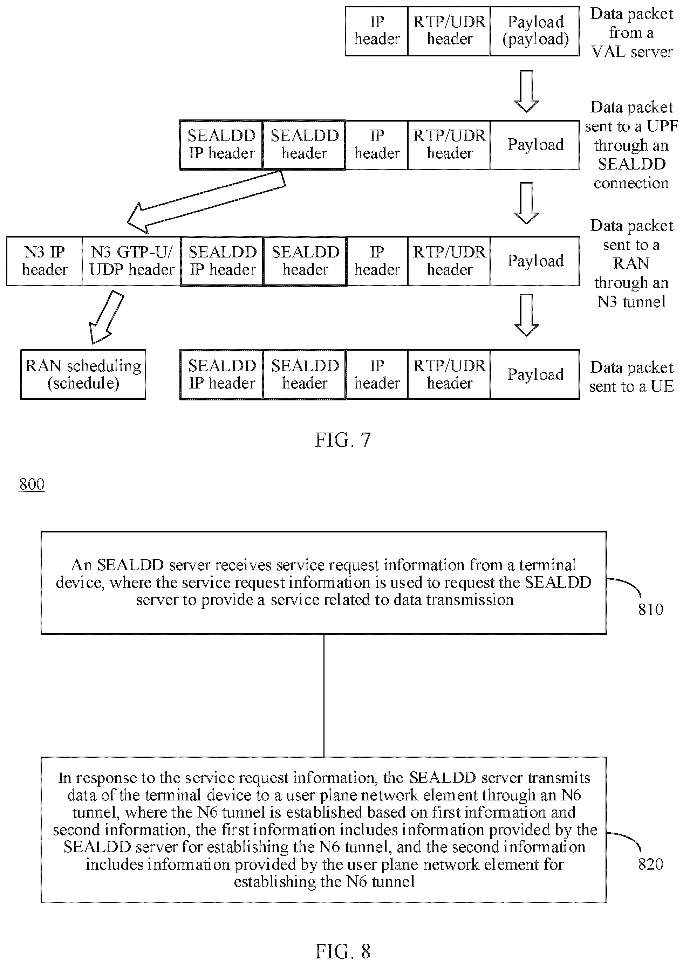

FIG. 7 is a diagram of a data packet transmitted based on the solution B according to an embodiment of this application. As shown in FIG. 7, an SEALDD IP header and an SEALDD header are added to a data packet sent by the SEALDD server to the UPF by using the SEALDD connection. In this way, the SEALDD server may send the data packet to the UPF through the SEALDD connection. The SEALDD header may include feature information of the data packet. A data packet sent by the UPF to the RAN includes the SEALDD IP header and the SEALDD header, and an N3 IP header and an N3 tunnel header are further added. In this way, the UPF may send the data packet to the RAN through the N3 tunnel. The N3 tunnel header may include feature information of a data packet obtained by the UPF by parsing the SEALDD header.

The following describes in detail a communication method provided in embodiments of this application with reference to the accompanying drawings.

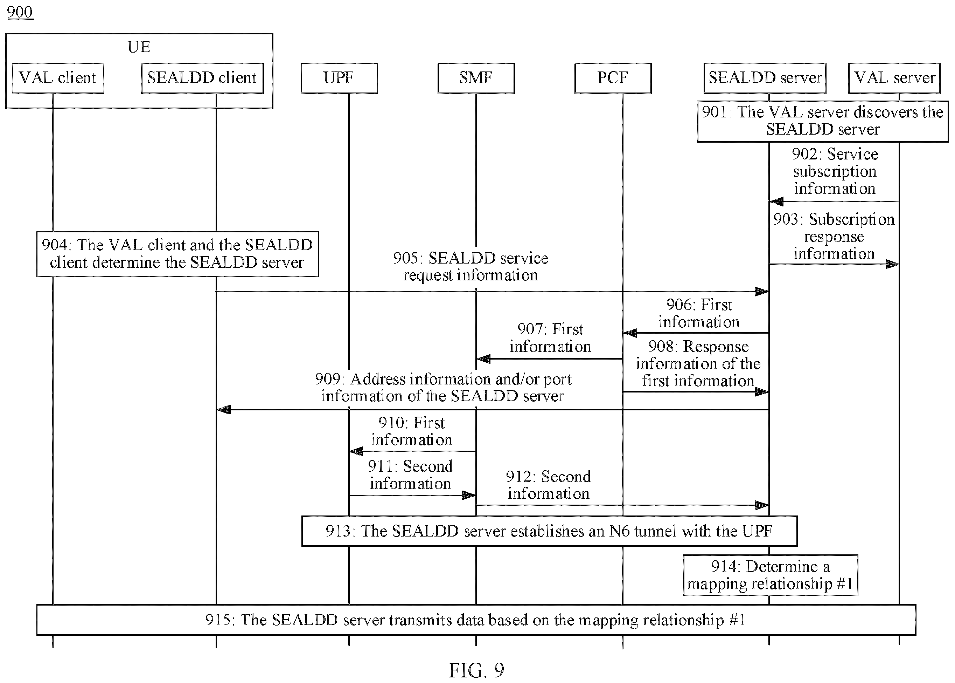

First, with reference to FIG. 8 and FIG. 9, an implementation that is applicable to the implementation 1, that is, the SEALDD server triggers establishment of the N6 tunnel at the UE granularity, in the foregoing solution A is described. The embodiments shown in FIG. 8 and FIG. 9 may be applicable to the network architectures shown in FIG. 1 to FIG. 3, and the embodiments shown in FIG. 8 and FIG. 9 may be further applicable to the network architecture shown in FIG. 4. This is not limited herein.

FIG. 8 is a diagram of a communication method 800 according to an embodiment of this application. The method 800 may include the following steps.

810: An SEALDD server receives service request information from a terminal device, where the service request information is used to request the SEALDD server to provide a service related to data transmission.

Optionally, the SEALDD service request information includes at least one of the following: an identity (identity, ID) of an SEALDD client on the terminal device, an IP address of the terminal device, and VAL service information (VAL service information).

In an example, the VAL service information may be used by the SEALDD server to determine whether to use an N6 tunnel to transmit a service data stream, or whether to use an N6 tunnel to provide a service related to data transmission for the terminal device. In a possible implementation, the VAL service information includes a service type, and the service type may implicitly indicate whether the N6 tunnel needs to be used. For example, the N6 tunnel needs to be used for some specific service types, or the N6 tunnel does not need to be used for some specific service types. In another possible implementation, the VAL service information includes information directly indicating whether the N6 tunnel needs to be used.

As another example, the VAL service request information may be used by the SEALDD server to determine whether to use an N6 tunnel to transmit a service data stream, or whether to use an N6 tunnel to provide a service related to data transmission for the terminal device. For example, the VAL service request information includes an indication of using the N6 tunnel. For example, a name of the VAL service request information is an N6 transmitting service (N6 transmitting service) or a media transmission service (media transfer service), and the VAL service request information enables the N6 tunnel by default for transmission.

820: In response to the service request information, the SEALDD server transmits data of the terminal device to a user plane network element through an N6 tunnel, where the N6 tunnel is established based on first information and second information, the first information includes information provided by the SEALDD server for establishing the N6 tunnel, and the second information includes information provided by the user plane network element for establishing the N6 tunnel.

Optionally, before step 820, the method 800 further includes: The SEALDD server establishes the N6 tunnel based on the first information and the second information. The N6 tunnel is a tunnel between the SEALDD server and the user plane network element. That the SEALDD server establishes the N6 tunnel may be understood as that the SEALDD server configures the N6 tunnel based on the first information and the second information. In other words, after the SEALDD server obtains the first information and the second information, the SEALDD server may transmit data through the N6 tunnel. It may be understood that if the SEALDD server has established or configured the N6 tunnel, the N6 tunnel may be used to transmit data.

The first information includes information provided by the SEALDD server for establishing the N6 tunnel between the SEALDD server and the user plane network element. For example, the first information is the information provided by the SEALDD server for establishing the N6 tunnel between the SEALDD server and the user plane network element. For another example, the first information includes information provided by the SEALDD server for establishing the N6 tunnel between the SEALDD server and the user plane network element and other information. The other information may be, for example, importance information of each N6 tunnel. As described above, at least one N6 tunnel may be established between the SEALDD server and the user plane network element. If at least two N6 tunnels are established between the SEALDD server and the user plane network element, the SEALDD server may further send importance information of each N6 tunnel to a PCF. In other words, the first information further includes the importance information of each N6 tunnel. The importance information of each N6 tunnel may also be referred to as priority information (priority information) of each N6 tunnel.

Optionally, the first information includes at least one of the following: an ID (UE ID) of the terminal device, N6 routing information (N6 routing information), an application traffic descriptor (APP traffic descriptor) corresponding to N6 routing, and a tunnel endpoint identifier (tunnel endpoint identifier, TEID) of the N6 tunnel on an SEALDD server side. The APP traffic descriptor corresponding to the N6 routing includes, for example, address information of the SEALDD server used for the N6 tunnel and/or port information of the SEALDD server used for the N6 tunnel. As described above, the first information may further include other information, for example, the importance information of each N6 tunnel.

The second information includes information provided by the user plane network element for establishing the N6 tunnel between the SEALDD server and the user plane network element. For example, the second information is information provided by the user plane network element for establishing the N6 tunnel between the SEALDD server and the user plane network element. For another example, the first information includes information provided by the user plane network element for establishing the N6 tunnel between the SEALDD server and the user plane network element and other information. The other information may include, for example, a session ID (session ID) and a QoS flow identifier (QoS flow identifier, QFI).

Optionally, the second information includes at least one of the following: downlink port information allocated by the user plane network element to the N6 tunnel, address information of the user plane network element, and a TEID on a user plane network element side. As described above, the second information may further include other information such as the session ID and the QFI.

A manner in which the SEALDD server obtains the second information is not limited.

In a possible implementation, the user plane network element sends the second information to the SEALDD server, and correspondingly, the SEALDD server receives the second information from the user plane network element. In an example, the user plane network element may send the second information to the SEALDD server by using a session management network element. For example, the user plane network element sends the second information to the session management network element; and after receiving the second information, the session management network element sends the second information to the SEALDD server.

In another possible implementation, the session management network element sends the second information to the SEALDD server, and correspondingly, the SEALDD server receives the second information from the session management network element. For example, the session management network element determines or configures the second information, and sends the second information to the SEALDD server.

According to the foregoing technical solution, the N6 tunnel between the SEALDD server and the user plane network element, for example, an N6 tunnel at a terminal granularity or a specific data transmission service granularity of a terminal, is established, so that the SEALDD server can provide a service for the terminal device through the user plane network element. Specifically, after receiving the service request information of the terminal device, the SEALDD server transmits the data of the terminal device to the user plane network element through the N6 tunnel between the SEALDD server and the user plane network element. The N6 tunnel may be determined by the SEALDD server based on the information provided by the SEALDD server for establishing the N6 tunnel and the information provided by the user plane network element for establishing the N6 tunnel.

Optionally, that the SEALDD server transmits data of the terminal device to a user plane network element through an N6 tunnel includes at least the following several implementations.

In a first possible implementation, the SEALDD server receives a first data packet from an application server; and the SEALDD server sends the first data packet to the user plane network element through the N6 tunnel based on address information and/or port information of the first data packet and a mapping relationship #1. The mapping relationship #1 indicates a relationship among the SEALDD server, the application server, the terminal device, and the N6 tunnel. Optionally, the first data packet includes feature information of the first data packet.

The mapping relationship #1 is used to associate the N6 tunnel with the terminal device, the SEALDD server, and the application server. In other words, the mapping relationship #1 is used to associate the N6 tunnel with the following two connections: a connection between the SEALDD server and the SEALDD client on the terminal device, and a connection between a VAL server and a VAL client on the terminal device.

In an example, the mapping relationship #1 is a relationship among the SEALDD server, the VAL server, the SEALDD client, the VAL client, and the N6 tunnel. Optionally, the mapping relationship #1 further includes ID information of UE. The ID information of the UE may be address information of the UE, or may be generic public subscription identifier (generic public subscription identifier, GPSI) information. For example, the SEALDD server may query a core network for GPSI information corresponding to a user address through an existing mechanism.

In a second possible implementation, the SEALDD server receives a second data packet from the user plane network element through the N6 tunnel; and the SEALDD server sends the second data packet to an application server based on address information and/or port information of the second data packet, and the N6 tunnel and a mapping relationship #1. The mapping relationship #1 indicates a relationship among the SEALDD server, the application server, the terminal device, and the N6 tunnel. Optionally, the second data packet includes media stream information, and the media stream information is used to represent a type of the second data packet.

For the mapping relationship #1, refer to the description in the first possible implementation. Details are not described herein again.

Optionally, the method 800 further includes: The SEALDD server sends the first information to the user plane network element. The first information is used to trigger the user plane network element to establish the N6 tunnel. In response to the first information, the user plane network element transmits the data of the terminal device to the SEALDD server through the N6 tunnel. Further, optionally, that the SEALDD server sends the first information to the user plane network element includes: The SEALDD server sends the first information to the user plane network element when the SEALDD server determines, based on the service request information, to transmit the data of the terminal device on the N6 tunnel.

In a first possible implementation, the SEALDD server sends the first information to the user plane network element. After receiving the first information, the user plane network element may establish the N6 tunnel by default, and may transmit the data of the terminal device to the SEALDD server through the N6 tunnel. Based on this implementation, in response to the first information, it may be understood that the user plane network element learns, based on the first information, that the N6 tunnel needs to be established, and determines the N6 tunnel with reference to the first information (that is, the information provided by the SEALDD server for establishing the N6 tunnel) and the information provided by the user plane network element for establishing the N6 tunnel.

In a second possible implementation, the SEALDD server sends the first information and indication information (denoted as indication information #1 for differentiation) to the first information. The indication information #1 indicates to establish the N6 tunnel. After receiving the first information and the indication information #1, the user plane network element may determine, based on the indication information #1, to establish the N6 tunnel, and may transmit the data of the terminal device to the SEALDD server through the N6 tunnel. Based on this implementation, in response to the first information, it may be understood that the user plane network element determines the N6 tunnel with reference to the first information (that is, the information provided by the SEALDD server for establishing the N6 tunnel) and the information provided by the user plane network element for establishing the N6 tunnel.

In an example, the indication information #1 is implemented by using at least one bit. For example, it is assumed that one bit indicates whether to establish the N6 tunnel. If the bit is set to "0", it indicates that the N6 tunnel is not established. If the bit is set to "1", it indicates that the N6 tunnel is established. It should be understood that the foregoing description is merely an example for description, and this is not limited.

The SEALDD server may send the first information to the user plane network element by using another network element such as the session management network element.

Optionally, the user plane network element establishes the N6 tunnel based on the first information and the second information. The N6 tunnel is a tunnel between the SEALDD server and the user plane network element. That the user plane network element establishes the N6 tunnel may be understood as that the user plane network element configures the N6 tunnel based on the first information and the second information, or after the user plane network element obtains the first information and the second information, the user plane network element may transmit data through the N6 tunnel. It may be understood that if the user plane network element has established or configured the N6 tunnel, the user plane network element may transmit data through the N6 tunnel.

Optionally, after step 810, the method 800 further includes: The SEALDD server sends the address information of the SEALDD server and/or the port information of the SEALDD server to the terminal device. After receiving the address information and/or the port information of the SEALDD server, the terminal device may use the address information and/or the port information of the SEALDD server to send data to the SEALDD server.

The address information of the SEALDD server is address information of the SEALDD server used for the N6 tunnel, that is, address information of the SEALDD server when data is transmitted through the N6 tunnel. The port information of the SEALDD server is port information of the SEALDD server used for the N6 tunnel, that is, port information of the SEALDD server when data is transmitted through the N6 tunnel.

For ease of understanding, the following provides an example description of the embodiment shown in the method 800 with reference to FIG. 9. In the following example, it is assumed that a user plane network element is a UPF, a session management network element is an SMF, a terminal device is a UE, and an SEALDD client and a VAL client in the UE are separately used for description. For explanations of related steps and related terms, refer to related descriptions in the method 800. Details are not described herein again.

FIG. 9 is a schematic flowchart of a communication method 900 according to an embodiment of this application. The method 900 is applicable to the method 800, that is, a scenario in which the SEALDD server triggers establishment of the N6 tunnel at the UE granularity. The method 900 may include the following steps.

901: A VAL server discovers the SEALDD server.

In an example, the VAL server may discover the SEALDD server through a common application programming interface (application programming interface, API) frame (common API framework, CAPIF). The VAL server may sense whether the SEALDD server supports the N6 tunnel. Therefore, in a process of discovering the SEALDD server, the VAL server may select the SEALDD server that supports the N6 tunnel.

902: The VAL server sends service subscription (service subscription) information to the SEALDD server.

The service subscription information may be used to request to subscribe to an SEALDD service.

Optionally, the service subscription information includes a media transmission service enhancement indicator (media transmission service enhancement indicator). The media transmission service enhancement indicator may indicate to add feature information of a data packet to a header of the data packet when data of the VAL server is transmitted. To be specific, if the service subscription information includes the media transmission service enhancement indicator, the SEALDD server needs to add the feature information of the data packet to the header of the data packet when the data of the VAL server is transmitted. Alternatively, the media transmission service enhancement indicator may indicate to transmit the data of the VAL server through the N6 tunnel. To be specific, if the service subscription information includes the media transmission service enhancement indicator, it indicates that the SEALDD server needs to use the N6 tunnel when the data of the VAL server is transmitted. For the feature information of the data packet, refer to the foregoing description. Details are not described herein again.

Optionally, the service subscription information includes VAL service information.

903: The SEALDD server sends subscription response (subscription response) information to the VAL server.

The subscription response information may be used to notify the VAL server whether subscription succeeds. In this embodiment of this application, it is assumed that the subscription response information is used to notify the VAL server that the subscription succeeds.

It may be understood that step 903 is an example for description, and is not limited herein. For example, if the SEALDD server does not send subscription failure information to the VAL server, the VAL server may consider that the subscription succeeds by default.

904: The VAL client and the SEALDD client determine the SEALDD server.

The VAL client and the SEALDD client may discover and select the SEALDD server, and obtain a control plane API interface of the SEALDD server.

905: The SEALDD client sends SEALDD service request (SEALDD service request) information to the SEALDD server.

In an example, the SEALDD client sends the SEALDD service request information to the SEALDD server through the control plane API interface of the SEALDD server.

The SEALDD service request information (or service request information for short) may be used to request the SEALDD server to provide a service, for example, provide a service related to data transmission. The SEALDD service request may also be referred to as, for example, an SEALDD service trigger request (SEALDD service trigger request), and a name of the SEALDD service request does not limit the protection scope of embodiments of this application.

Optionally, the SEALDD service request information includes at least one of the following: an identity (identity, ID) of the SEALDD client, an IP address of a UE corresponding to the SEALDD client, and the VAL service information. For the VAL service information, refer to descriptions in the method 800. Details are not described herein again.

906: The SEALDD server sends first information to a PCF.

In a possible implementation, the SEALDD server sends the first information to the PCF by using an AF request (AF request). For the first information, refer to related descriptions in the method 800. Details are not described herein again.

907: The PCF sends the first information to the SMF.

In an example, the PCF may send session management policy association modification request (SM Policy Association Modification Request) information to the SMF, and the information includes the first information.

908: The PCF sends response information of the first information to the SEALDD server.

For example, after sending the first information to the SMF, the PCF may send the response information of the first information to the SEALDD server. Alternatively, for another example, if the PCF successfully receives the first information, the PCF sends the response information of the first information to the SEALDD server.

In a possible implementation, if the SEALDD server sends the first information to the PCF by using the AF request in step 906, the PCF sends an AF response (AF response) to the SEALDD server in step 908.

909: The SEALDD server sends address information and/or port information of the SEALDD server to the SEALDD client.

The address information of the SEALDD server is address information of the SEALDD server used for the N6 tunnel, that is, address information of the SEALDD server when data is transmitted through the N6 tunnel. The port information of the SEALDD server is port information of the SEALDD server used for the N6 tunnel, that is, port information of the SEALDD server when data is transmitted through the N6 tunnel.

In an example, the SEALDD server sends SEALDD service response (SEALDD service response) information to the SEALDD client, and the SEALDD service response information includes the address information and/or the port information of the SEALDD server. The SEALDD service response may also be referred to as, for example, an SEALDD service trigger response (SEALDD service trigger response), and a name of the SEALDD service response does not limit the protection scope of embodiments of this application.

After receiving the address information and/or the port information of the SEALDD server, the SEALDD client may use the address information and/or the port information of the SEALDD server to send data (for example, media data) to the SEALDD server. If the SMF or the UPF detects that the SEALDD client sends data to the SEALDD server, the SMF may provide the first information for the UPF, so that the UPF provides second information, as shown in steps 910 and 920.

910: The SMF sends the first information to the UPF.

For example, when the SMF detects that the SEALDD client sends media data to the SEALDD server, the SMF sends the first information to the UPF. Alternatively, for another example, when the UPF detects that the SEALDD client sends media data to the SEALDD server, the UPF sends a request to the SMF, and the SMF sends the first information to the UPF based on the request of the UPF.

In a possible implementation, the SMF sends an N4 session modification request (N4 session modification request) message to the UPF, and the N4 session modification request message includes the first information.

Optionally, the SMF further sends at least one of the following to the UPF: a session ID (session ID), a data packet filtering rule, and a QFI.

911: The UPF sends the second information to the SMF.

The UPF may determine the second information in response to the first information, and send the second information to the SEALDD server by using the SMF, to establish an N6 tunnel between the SEALDD server and the UPF.

For the second information, refer to related descriptions in the method 800. Details are not described herein again.

In a possible implementation, the UPF sends an N4 session modification response (N4 session modification response) message to the SMF, and the N4 session modification response message includes the second information.

912: The SMF sends the second information to the SEALDD server.

In a possible implementation, the SMF sends AF notification (AF notification) information to the SEALDD server, and the AF notification information includes the second information.

913: The SEALDD server establishes the N6 tunnel with the UPF.

The N6 tunnel between the SEALDD server and the UPF is established based on the first information and the second information, so that data can be transmitted based on the N6 tunnel.

After the N6 tunnel is established, the SEALDD server may further configure a connection to the VAL server, and maintain a mapping relationship #1 among the VAL server, the VAL client, and the N6 tunnel, as shown in step 914.

914: The SEALDD server determines the mapping relationship #1.

For the mapping relationship #1, refer to related descriptions in the method 800. Details are not described herein again.

915: The SEALDD server transmits data based on the mapping relationship #1.

In other words, the SEALDD server transmits data of the terminal device to the UPF through the N6 tunnel based on the mapping relationship #1.

Downlink transmission is used in an example, to be specific, the VAL server sends data to the VAL client by using the SEALDD server and the SEALDD client. For example, the VAL server sends a data packet to the SEALDD server, and the SEALDD server determines, based on an address and/or a port corresponding to the data packet, a VAL client corresponding to the data packet. The address corresponding to the data packet may be, for example, a source address and/or a destination address of the data packet, and the port corresponding to the data packet may be, for example, a source port and/or a destination port of the data packet. After determining the VAL client corresponding to the data packet, the SEALDD server determines the corresponding N6 tunnel based on the VAL client and the mapping relationship #1. The SEALDD server adds feature information of the data packet to a header of the data packet, and sends the data packet to the UPF through the N6 tunnel. After receiving the data packet from the N6 tunnel, the UPF matches the QFI and a GTP-U header. For example, the UPF determines a UE and a QFI that are corresponding to the data packet, removes an N6 GTP-U tunnel header, copies and adds the feature information of the data packet in the N6 GTP-U tunnel header to a corresponding N3 GTP-U tunnel header, and sends the N3 GTP-U tunnel header to a RAN. After receiving the data packet from the UPF, the RAN may perform optimized transmission based on the feature information of the data packet in the N3 GTP-U tunnel header, and send the data packet to the SEALDD client, so that the SEALDD client sends the data packet to the VAL client. For a form of the data packet in a transmission process, refer to the form shown in FIG. 5.

Optionally, if at least two N6 tunnels are established between the SEALDD server and the UPF, during data transmission, the SEALDD server may further transmit different data through different N6 tunnels.

The foregoing describes a possible procedure by using an example with reference to step 901 to step 915 shown in FIG. 9. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application.

According to the foregoing technical solution, after receiving a request from the SEALDD client, the SEALDD server may dynamically trigger establishment of the N6 tunnel at the UE granularity. For example, after the SEALDD server receives the request of the SEALDD client, the SEALDD server sends an AF request to a core network, to establish a N6 tunnel for a UE corresponding to the SEALDD client. When the UPF or the SMF detects that the SEALDD client sends data to the SEALDD server, the UPF may provide, for the SEALDD server, port information allocated to the N6 tunnel and address information of the UPF, to complete an N6 tunnel establishment procedure between the SEALDD server and the UPF. In addition, after the N6 tunnel is established, the SEALDD server may maintain a mapping relationship among the SEALDD server, the VAL server, the SEALDD client, the VAL client, and the N6 tunnel. In this way, data can be subsequently transmitted based on the mapping relationship.

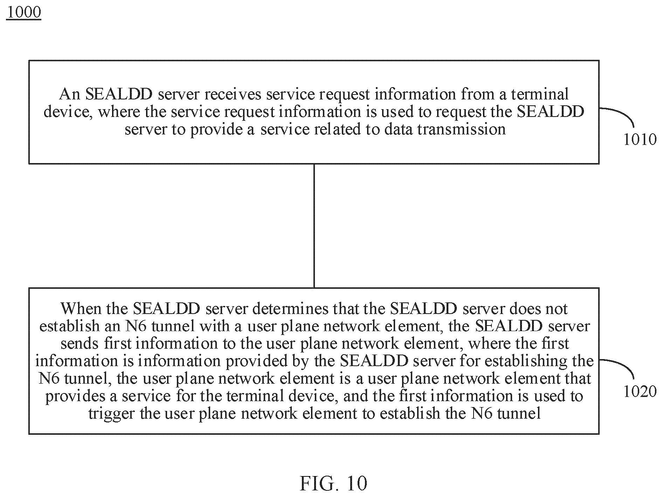

With reference to FIG. 10 to FIG. 13, the following describes the implementation 2 applicable to the foregoing solution A, that is, the SEALDD server and the UPF dynamically configure the N6 tunnel at the UPF granularity. The embodiments shown in FIG. 10 to FIG. 13 may be applicable to the network architectures shown in FIG. 1 to FIG. 3, and the embodiments shown in FIG. 10 to FIG. 13 may be further applicable to the network architecture shown in FIG. 4. This is not limited herein.

FIG. 10 is a diagram of a communication method 1000 according to another embodiment of this application. The method 1000 may include the following steps.

1010: An SEALDD server receives service request information from a terminal device, where the service request information is used to request the SEALDD server to provide a service related to data transmission.

For step 1010, refer to step 810 in the method 800, and details are not described herein again.

1020: When the SEALDD server determines that an N6 tunnel is not established between the SEALDD server and a user plane network element, the SEALDD server sends first information to the user plane network element, where the first information is information provided by the SEALDD server for establishing the N6 tunnel, the user plane network element is a user plane network element that provides a service for the terminal device, and the first information is used to trigger the user plane network element to establish the N6 tunnel.

For the first information, refer to related descriptions in the method 800. Details are not described herein again.

Optionally, before step 1020, the method 1000 further includes: The SEALDD server determines whether to establish an N6 tunnel with the user plane network element. For example, the SEALDD server detects whether the SEALDD server establishes an N6 tunnel with the user plane network element. If the SEALDD server has established an N6 tunnel with the user plane network element, the SEALDD server determines that no N6 tunnel needs to be established with the user plane network element. If the SEALDD server has not established an N6 tunnel with the user plane network element, the SEALDD server determines to establish an N6 tunnel with the user plane network element.

In a possible implementation, the SELADD server may determine, based on the terminal device and a range of the terminal device that can be served by the established N6 tunnel, whether to establish the N6 tunnel with the user plane network element. For example, if the terminal device that can be served by the established N6 tunnel does not include the terminal device in step X1010, the SEALDD server determines to establish the N6 tunnel with the user plane network element.

Optionally, the SEALDD server sends address information of the SEALDD server and/or port information of the SEALDD server to the terminal device. For details, refer to related descriptions in the method 800. Details are not described herein again.

Optionally, the method 1000 further includes: The SEALDD server receives second information from the user plane network element. The second information is information provided by the user plane network element for establishing the N6 tunnel. The SEALDD server transmits data of the terminal device to the user plane network element through the N6 tunnel. The N6 tunnel is determined based on the first information and the second information. For the second information, refer to related descriptions in the method 800. Details are not described herein again. In addition, for a specific implementation in which the SEALDD server transmits the data of the terminal device to the user plane network element through the N6 tunnel, refer to related descriptions in the method 800. Details are not described herein again.

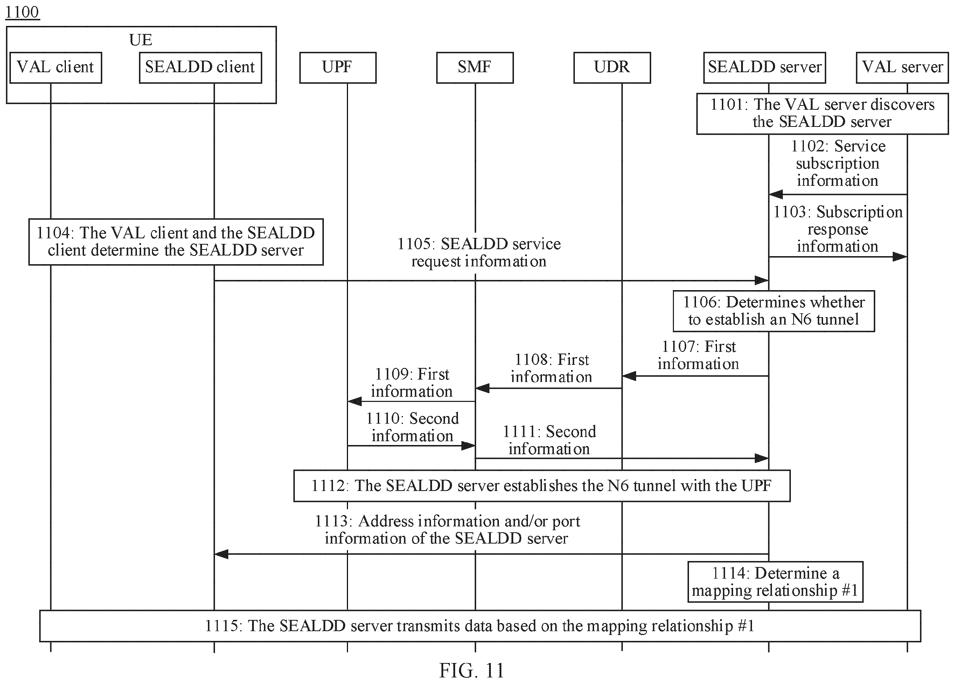

For ease of understanding, the following provides an example description of the embodiment shown in the method 1000 with reference to FIG. 11. In the following example, it is assumed that a user plane network element is a UPF, a session management network element is an SMF, a terminal device is a UE, and an SEALDD client and a VAL client in the UE are separately used for description. For explanations of related steps and related terms, refer to related descriptions in the method 1000. Details are not described herein again.

FIG. 11 is a schematic flowchart of a communication method 1100 according to another embodiment of this application. The method 1100 is applicable to the method 1000, that is, a scenario in which the SEALDD server and the UPF dynamically configure the N6 tunnel at the UPF granularity and the SEALDD server may be responsible for detecting whether the N6 tunnel has been established. The method 1100 may include the following steps.

1101: A VAL server discovers the SEALDD server.

1102: The VAL server sends service subscription information to the SEALDD server.

1103: The SEALDD server sends subscription response information to the VAL server.

1104: The VAL client and the SEALDD client determine the SEALDD server.

1105: The SEALDD client sends SEALDD service request information to the SEALDD server.

Step 1101 to step 1105 are similar to step 901 to step 905, and details are not described herein again.

1106: The SEALDD server determines whether to establish an N6 tunnel.

In a possible implementation, the SELADD server may determine, based on a UE corresponding to the SEALDD client and a range of the UE that can be served by the established N6 tunnel, whether to initiate an N6 tunnel establishment procedure. In an example, the SELADD server may determine, based on an ID of the UE corresponding to the SEALDD client and an ID of the UE that can be served by the established N6 tunnel, whether to initiate the N6 tunnel establishment procedure. For example, if an ID range of the UE that can be served by the established N6 tunnel includes the UE corresponding to the SEALDD client, the N6 tunnel establishment procedure is not initiated; or if an ID range of the UE that can be served by the established N6 tunnel does not include the UE corresponding to the SEALDD client, the N6 tunnel establishment procedure is initiated. A UE ID may include a UE IP address.

If the SEALDD server determines to initiate the N6 tunnel establishment procedure, subsequent steps 1107 to 1112 are performed; otherwise, step 1113 is directly performed.

1107: The SEALDD server sends first information to a UDR.

For descriptions of the first information, refer to related descriptions in step 906. Details are not described herein again.

In a possible implementation, the SEALDD server sends the first information to the UDR by using an AF request. The AF request may be sent to the UDR by using an NEF. In an example, the AF request may be identified by a UE ID.

1108: The UDR sends the first information to the SMF.

For example, the UDR may actively send the first information to the SMF. To be specific, after receiving the first information, the UDR directly sends the first information to the SMF. For another example, the SMF may obtain the first information from the UDR in a subscription notification manner. For example, the SMF may subscribe to the first information by using the NEF, the NEF may query the UDR for the first information, and the UDR sends the first information to the NEF, so that the NEF sends the first information to the SMF.

In a possible implementation, the UDR sends an N6 tunnel notification request message to the SMF, and the message includes the first information.

1109: The SMF sends the first information to the UPF.

1110: The UPF sends second information to the SMF.

1111: The SMF sends the second information to the SEALDD server.

Optionally, the SMF further sends, to the SEALDD server, information about the UE served by the UPF, for example, an address range of the UE, for example, a UE ID.

In a possible implementation, the SMF sends AF notification information to the SEALDD server, and the AF notification information includes the second information, or the AF notification information includes the second information and the information about the UE served by the UPF.

1112: The SEALDD server establishes the N6 tunnel with the UPF.

Step 1109 to step 1112 are similar to step 910 to step 913, and details are not described herein again.

1113: The SEALDD server sends address information and/or port information of the SEALDD server to the SEALDD client.

Step 1113 is similar to step 909, and details are not described herein again.

1114: The SEALDD server determines a mapping relationship #1.

1115: The SEALDD server transmits data based on the mapping relationship #1.

Step 1114 and step 1115 are similar to step 914 and step 915, and details are not described herein again.

The foregoing describes a possible procedure by using an example with reference to step 1101 to step 1115 shown in FIG. 11. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application.

According to the foregoing technical solution, the SEALDD server may dynamically trigger establishment of the N6 tunnel at the UPF granularity. For example, after the SEALDD server receives the SEALDD service request information of the SEALDD client, the SEALDD server may first determine whether to establish an N6 tunnel. If the SEALDD server determines to establish an N6 tunnel, the SEALDD server establishes the N6 tunnel with the UPF. In addition, the SMF may further notify the SEALDD server of the information about the UE that can be served by the N6 tunnel. In addition, after the N6 tunnel is established, the SEALDD server may maintain a mapping relationship among the SEALDD server, the VAL server, the SEALDD client, the VAL client, and the N6 tunnel. In this way, data can be subsequently transmitted based on the mapping relationship.

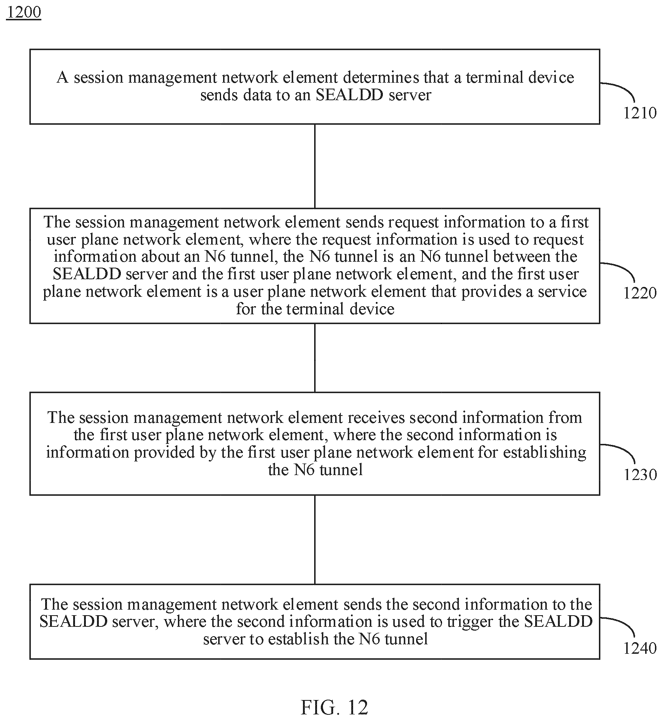

FIG. 12 is a diagram of a communication method 1200 according to another embodiment of this application. The method 1200 may include the following steps.

1210: A session management network element determines that a terminal device sends data to an SEALDD server.

In a possible implementation, the session management network element detects that the terminal device sends data to the SEALDD server.

In another possible implementation, another core network element, for example, a user plane network element, detects that the terminal device sends data to the SEALDD server, and the another core network element notifies the session management network element of the fact that the terminal device sends data to the SEALDD server.

1220: The session management network element sends request information to a first user plane network element, where the request information is used to request information about an N6 tunnel, the N6 tunnel is an N6 tunnel between the SEALDD server and the first user plane network element, and the first user plane network element is a user plane network element that provides a service for the terminal device.

Specifically, when determining that the terminal device sends data to the SEALDD server, the session management network element may request, from the user plane network element (for example, denoted as the first user plane network element) that provides a service for the terminal device, the information about the N6 tunnel, that is, the information about the N6 tunnel provided by the first user plane.

Optionally, before step 1220, the method 1200 further includes: The session management network element obtains information about at least one N6 tunnel. The information about the at least one N6 tunnel includes information about an N6 tunnel established between the SEALDD server and at least one user plane network element. That the session management network element sends request information to a first user plane network element includes: When the session management network element determines that the at least one user plane network element does not include the first user plane network element, the session management network element sends the request information to the first user plane network element.

For example, the session management network element may determine whether the SEALDD server has established the N6 tunnel with the first user plane network element, and when determining that the SEALDD server has not established the N6 tunnel with the first user plane network element, the session management network element requests the information about the N6 tunnel from the first user plane network element.

In an example, the information about the at least one N6 tunnel includes at least one of the following: N6 tunnel information on an SEALDD server side, port information of a data packet corresponding to the at least one N6 tunnel, and address information of the data packet corresponding to the at least one N6 tunnel.

Optionally, when the session management network element determines that the at least one user plane network element includes the first user plane network element, the session management network element sends information about the terminal device and indication information to the SEALDD server. The indication information indicates information about the N6 tunnel established between the SEALDD server and the first user plane network element. The SEALDD server may establish a mapping relationship #1 based on the indication information and the information about the terminal device, so that the SEALDD server may transmit data of the terminal device to the user plane network element through the N6 tunnel based on the mapping relationship #1. For the mapping relationship #1, refer to related descriptions in the method 800. Details are not described herein again.

A manner in which the session management network element obtains the information about the at least one N6 tunnel is not limited.

In a possible implementation, the SEALDD server provides the information about the at least one N6 tunnel for the user plane network element.

In another possible implementation, the SEALDD server provides the information about the at least one N6 tunnel for a storage management network element, and the session management network element may query the storage management network element for the information about the at least one N6 tunnel.

1230: The session management network element receives second information from the first user plane network element, where the second information is information provided by the first user plane network element for establishing the N6 tunnel.

In response to the request information, the first user plane network element sends the second information to the session management network element. For the second information, refer to related descriptions in the method 800. Details are not described herein again.

1240: The session management network element sends the second information to the SEALDD server, where the second information is used to trigger the SEALDD server to establish the N6 tunnel.

After receiving the second information, the SEALDD server may determine the N6 tunnel based on the second information and information (namely, the first information) provided by the SEALDD server for establishing the N6 tunnel.

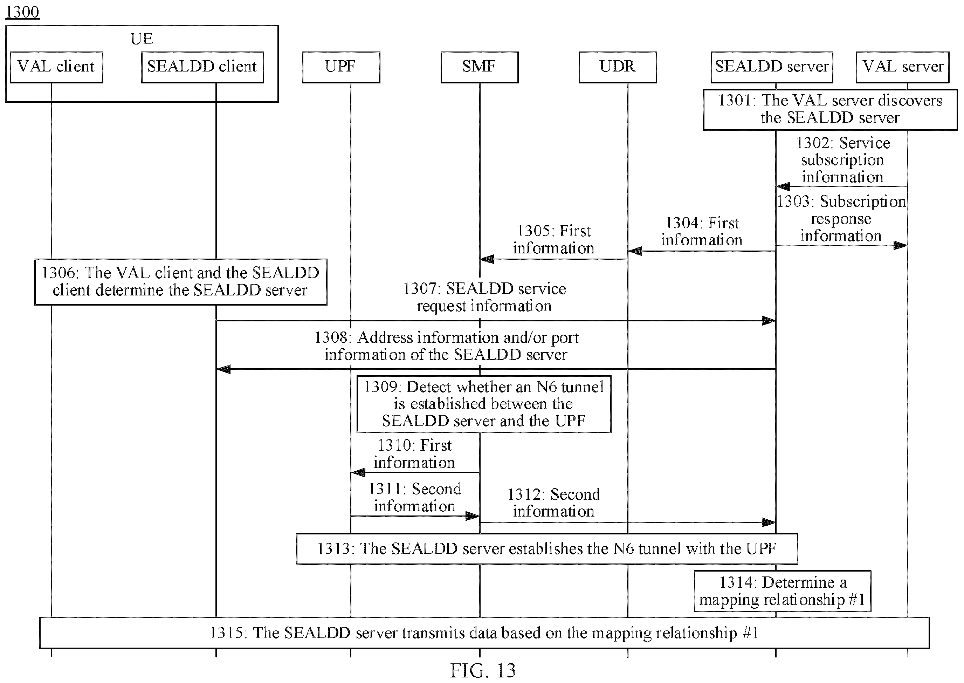

For ease of understanding, the following provides an example description of the embodiment shown in the method 1200 with reference to FIG. 13. In the following example, it is assumed that a user plane network element is a UPF, a session management network element is an SMF, a terminal device is a UE, and an SEALDD client and a VAL client in the UE are separately used for description. For explanations of related steps and related terms, refer to related descriptions in the method 1200. Details are not described herein again.

FIG. 13 is a schematic flowchart of a communication method 1300 according to another embodiment of this application. The method 1300 is applicable to the method 1200, that is, a scenario in which the SEALDD server and the UPF dynamically configure the N6 tunnel at the UPF granularity and the SMF may be responsible for detecting whether the N6 tunnel has been established. The method 1300 may include the following steps.

1301: A VAL server discovers the SEALDD server.

1302: The VAL server sends service subscription information to the SEALDD server.

1303: The SEALDD server sends subscription response information to the VAL server.

Step 1301 to step 1303 are similar to step 901 to step 903, and details are not described herein again.

1304: The SEALDD server sends first information to a UDR.

For descriptions of the first information, refer to related descriptions in step 906. Details are not described herein again.

In a possible implementation, the SEALDD server sends the first information to the UDR by using an AF request. The AF request may be sent to the UDR by using an NEF. In an example, the AF request is a DNAI granularity or a slice granularity. In other words, when the UE uses the slice or the UE is in the DNAI, the UDR notifies the SMF of the first information. Because the AF request is the DNAI granularity or the slice granularity, if the UE initiates a session establishment procedure, the UDR sends the first information to the SMF in the session establishment procedure, as shown in step 1305.

1305: The UDR sends the first information to the SMF.

The SMF may obtain the first information from the UDR in a subscription notification manner. For example, the SMF may subscribe to the first information by using the NEF, the NEF may query the UDR for the first information, and the UDR sends the first information to the NEF, so that the NEF sends the first information to the SMF.

In a possible implementation, the UDR sends an N6 tunnel information notification request (N6 tunnel information notification request) message to the SMF, and the N6 tunnel information notification request message includes the first information.

1306: The VAL client and the SEALDD client determine the SEALDD server.

1307: The SEALDD client sends SEALDD service request information to the SEALDD server.

Steps 1306 and 1307 are similar to steps 904 and 905, and details are not described herein again.

1308: The SEALDD server sends address information and/or port information of the SEALDD server to the SEALDD client.

Step 1308 is similar to step 909, and details are not described herein again.

After receiving the address information and/or the port information of the SEALDD server, the SEALDD client may use the address information and/or the port information of the SEALDD server to send data (for example, media data) to the SEALDD server. When the SEALDD client sends data to the SEALDD server, the SMF may first detect whether an N6 tunnel is established between the SEALDD server and the UPF, as shown in step 1309.

1309: The SMF detects whether an N6 tunnel is established between the SEALDD server and the UPF.

The UPF is a UPF that provides a service for the UE.

For example, when the SMF detects that the SEALDD client sends media data to the SEALDD server, the SMF detects whether the N6 tunnel is established between the SEALDD server and the UPF. Alternatively, for another example, when the UPF detects that the SEALDD client sends media data to the SEALDD server, the UPF sends a request to the SMF, and the SMF detects, based on the request of the UPF, whether the N6 tunnel is established between the SEALDD server and the UPF.

If the SEALDD server has not established an N6 tunnel with the UPF, the method 1300 further includes steps 1310 to 1314.

1310: The SMF sends the first information to the UPF.

1311: The UPF sends second information to the SMF.

1312: The SMF sends the second information to the SEALDD server.

1313: The SEALDD server establishes the N6 tunnel with the UPF.

1314: The SEALDD server determines a mapping relationship #1.

1315: The SEALDD server transmits data based on the mapping relationship #1.

Step 1310 to step 1315 are similar to step 910 to step 915, and details are not described herein again.

The foregoing describes a possible procedure by using an example with reference to step 1301 to step 1315 shown in FIG. 13. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application.

According to the foregoing technical solution, the SEALDD server may dynamically trigger establishment of the N6 tunnel at the UPF granularity. Compared with the method 1500 or 1700, the solution shown in the method 1100 is more flexible. For example, after the SEALDD server receives service subscription of the VAL server, the SEALDD server provides the first information for the UDR. The first information is used to establish the N6 tunnel. When the SEALDD client sends data to the SEALDD server, the SMF may first detect whether an N6 tunnel is established between the SEALDD server and the UPF. If an N6 tunnel is not established between the SEALDD server and the UPF, the SMF may obtain, from the UPF, port information allocated by the UPF to the N6 tunnel and address information of the UPF, and send the port information and the address information to the SEALDD server. In addition, after the N6 tunnel is established, the SEALDD server may maintain a mapping relationship among the SEALDD server, the VAL server, the SEALDD client, the VAL client, and the N6 tunnel. In this way, data can be subsequently transmitted based on the mapping relationship.

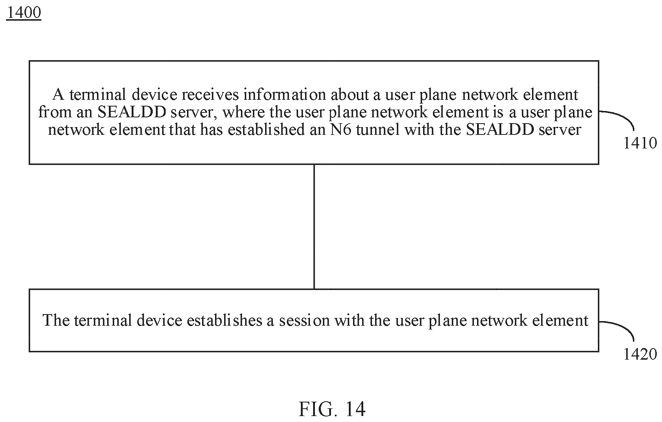

With reference to FIG. 14 to FIG. 17, the following describes an implementation that is applicable to the implementation 3 in the foregoing solution A, that is, an implementation in which the N6 tunnel is pre-configured between the SEALDD server and the UPF. The embodiments shown in FIG. 14 to FIG. 17 may be applicable to the network architectures shown in FIG. 1 to FIG. 3, and the embodiments shown in FIG. 14 to FIG. 17 may be further applicable to the network architecture shown in FIG. 4. This is not limited herein.

FIG. 14 is a diagram of a communication method 1400 according to another embodiment of this application. The method 1400 may include the following steps.

1410: A terminal device receives information about a user plane network element from an SEALDD server, where the user plane network element is a user plane network element that has established an N6 tunnel with the SEALDD server.

Correspondingly, the SEALDD server sends, to the terminal device, the information about the user plane network element that has established the N6 tunnel with the SEALDD server.

In an example, the information about the user plane network element includes at least one of the following: port information of the user plane network element, address information of the user plane network element, a data network name (data network name, DNN) of the user plane network element, and a network slice of the user plane network element.

It may be understood that N6 tunnels may be established between the SEALDD server and at least two user plane network elements. In this case, the SEALDD server may send information about at least two user plane network elements to the terminal device, or may send information about some of the at least two user plane network elements to the terminal device. This is not limited.

Optionally, before step 1410, the method 1400 further includes: The terminal device sends service request information to the SEALDD server. The service request information is used to request the SEALDD server to provide a service related to data transmission. In response to the service request information, the SEALDD server sends, to the terminal device, the information about the user plane network element that has established the N6 tunnel with the SEALDD server.

1420: The terminal device establishes a session with the user plane network element.

The terminal device may establish, based on the information about the user plane network element provided by the SEALDD server, the session with the user plane network element that has established the N6 tunnel with the SEALDD server. In this way, the user plane network element that has established the N6 tunnel with the SEALDD server can provide a service for the terminal device. A specific manner of establishing the session is not limited in this embodiment of this application.

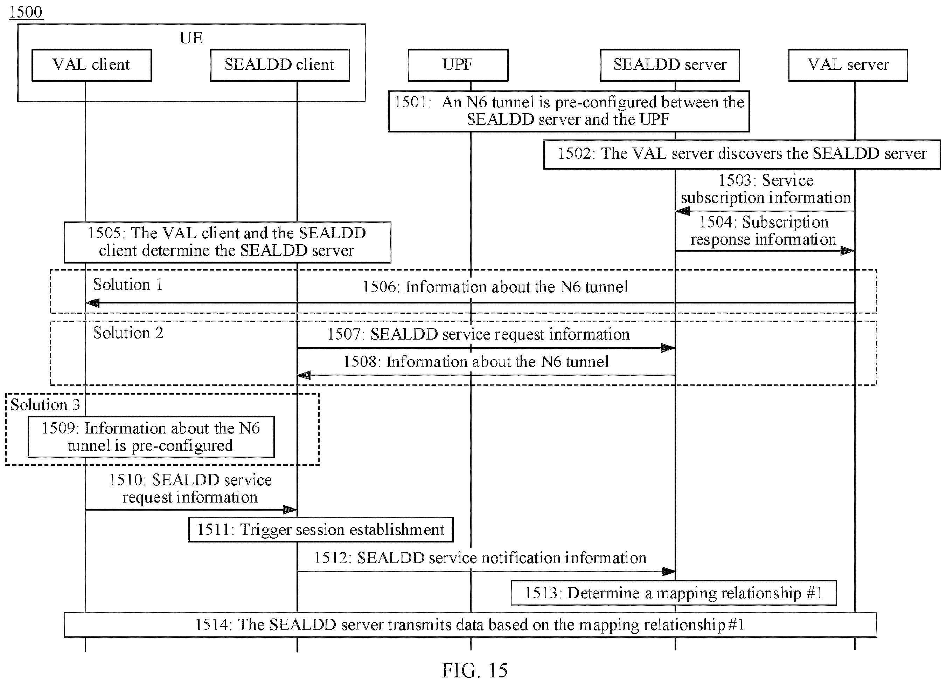

For ease of understanding, the following provides an example description of the embodiment shown in the method 1400 with reference to FIG. 15. In the following example, it is assumed that a user plane network element is a UPF, a session management network element is an SMF, a terminal device is a UE, and an SEALDD client and a VAL client in the UE are separately used for description. For explanations of related steps and related terms, refer to related descriptions in the method 1400. Details are not described herein again.

FIG. 15 is a schematic flowchart of a communication method 1500 according to another embodiment of this application. The method 1500 is applicable to the method 1400, that is, a scenario in which the N6 tunnel is pre-configured between the SEALDD server and the UPF, and when a UE session is established, the UPF for which the N6 tunnel has been established is selected for the UE. The method 1500 may include the following steps.

1501: The N6 tunnel is pre-configured between the SEALDD server and the UPF.

The SEALDD server and the UPF may configure the N6 tunnel in advance. The SEALDD server may sense information about an address and a port that are used by the UPF when the SEALDD server establishes the N6 tunnel with the UPF.

In an example, the UPF pre-configured with the N6 tunnel with the SEALDD server may be any UPF, or may be a specific UPF, for example, a UPF that is close to the SEALDD server. This is not limited herein. In addition, there may be at least one UPF pre-configured with the N6 tunnel with the SEALDD server. This is not limited herein.

1502: A VAL server discovers the SEALDD server.

Step 1502 is similar to step 901, and details are not described herein again.

1503: The VAL server sends service subscription information to the SEALDD server.

Step 1503 is similar to step 902, and details are not described herein again.

1504: The SEALDD server sends subscription response information to the VAL server.

Step 1504 is similar to step 903. A difference lies in that in step 1504, the subscription response information sent by the SEALDD server to the VAL server may include information about the N6 tunnel.

The information about the N6 tunnel indicates information about the N6 tunnel established by the SEALDD server and the UPF, that is, information about the N6 tunnel pre-configured in step 1501. For example, if the N6 tunnel is pre-configured between the SEALDD server and at least one UPF in step 1501, in step 1504, the information about the N6 tunnel indicates information about the N6 tunnel pre-configured between the SEALDD server and the at least one UPF. For another example, if at least one N6 tunnel is pre-configured between the SEALDD server and the UPF in step 1501, in step 1504, the information about the N6 tunnel indicates information about the at least one N6 tunnel pre-configured between the SEALDD server and the UPF.

Optionally, the information about the N6 tunnel includes at least one of the following: N6 tunnel information on an SEALDD server side, port information of a data packet corresponding to the N6 tunnel, address information of the data packet corresponding to the N6 tunnel, single network slice selection assistance information (single network slice selection assistance information, S-NSSAI), and a DNN.

1505: The VAL client and the SEALDD client determine the SEALDD server.

Step 1505 is similar to step 904, and details are not described herein again.

In the method 1500, the VAL client and/or the SEALDD client may obtain the information about the N6 tunnel, to select, for the UE, the UPF for which the N6 tunnel has been established. In an example, the method 1500 includes any one of the following solutions.

Solution 1: The VAL server notifies the VAL client of the information about the N6 tunnel.

Solution 2: The SEALDD server notifies the SEALDD client of the N6 tunnel information.

Solution 3: The information about the N6 tunnel is pre-configured for the VAL server.

For the information about the N6 tunnel, refer to the description in step 1504. The following describes in detail the foregoing three solutions.

Solution 1: The VAL server notifies the VAL client of the information about the N6 tunnel, as shown in step 1506.

1506: The VAL server sends the information about the N6 tunnel to the VAL client.

For example, the VAL server may notify the VAL client of the information about the N6 tunnel by using an application layer control message. The N6 tunnel information is the information about the N6 tunnel received by the VAL server in step 1504. The VAL server sends the information about the N6 tunnel to the VAL client, so that the VAL client can transmit data by using a specific address, a specific port, a specific DNN, or specific S-NSSAI.

For example, the information about the N6 tunnel includes port information of the N6 tunnel. After receiving the port information of the N6 tunnel, the VAL client may transmit data by using the port information of the N6 tunnel. In this way, the pre-configured N6 tunnel may be used.

For another example, the information about the N6 tunnel includes address information of the N6 tunnel. After receiving the address information of the N6 tunnel, the VAL client may transmit data by using the address information of the N6 tunnel. In this way, the pre-configured N6 tunnel may be used.

For another example, the information about the N6 tunnel includes a DNN. After receiving the DNN, the VAL client may transmit data by using the DNN. In this way, the UPF for which the N6 tunnel has been configured may provide a service, and then the N6 tunnel is used.

For another example, the information about the N6 tunnel includes S-NSSAI. After receiving the S-NSSAI, the VAL client may transmit data by using the S-NSSAI. In this way, the UPF for which the N6 tunnel has been configured may provide a service, and then the N6 tunnel is used.

Solution 2: The SEALDD server notifies the SEALDD client of the information about the N6 tunnel, as shown in step 1507 and step 1508.

1507: The SEALDD client sends SEALDD service request information to the SEALDD server.

Step 1507 is similar to step 905, and details are not described herein again.

1508: The SEALDD server sends the information about the N6 tunnel to the SEALDD client.

In a possible implementation, the SEALDD server sends SEALDD service response information to the SEALDD client, and the SEALDD service response information includes the information about the N6 tunnel. The information about the N6 tunnel is information about the N6 tunnel pre-configured in step 1501.

Solution 3: The information about the N6 tunnel is pre-configured for the VAL server, as shown in step 1509.

1509: The information about the N6 tunnel is pre-configured for the VAL client.

For example, in a client APP development phase, the information about the N6 tunnel is pre-configured for the VAL client, that is, the information about the N6 tunnel pre-configured in step 1501.

Based on any one of the foregoing solutions, the VAL client or the SEALDD client may learn of the information about the N6 tunnel.

1510: The VAL client sends the SEALDD service request information to the SEALDD client.

In step 1510, the VAL client triggers the SEALDD client to perform service transmission.

1511: The SEALDD client triggers session establishment.

1512: The SEALDD client sends SEALDD service notification (SEALDD service notification) information to the SEALDD server.

In a first possible case, if establishment of a new session is triggered by using a data packet of the N6 tunnel, the SEALDD client sends an ID of the SEALDD client and a new IP address corresponding to the SEALDD client to the SEALDD server. In an example, this case may be applicable to a client/server (client/server, CS) service.

In a second possible case, the SEALDD client sends a data packet whose target is an address and a port used by the N6 tunnel. The UPF identifies the data packet, encapsulates the data packet, and sends the encapsulated data packet to the SEALDD server through the N6 tunnel. In this case, the SEALDD server may learn of an ID of the SEALDD client and IP information of the SEALDD client based on the N6 tunnel. In this case, establishment of a new session may also be triggered. This is not limited herein. In an example, this case may be applicable to a browser/server (BS) service.

1513: The SEALDD server determines a mapping relationship #1.

For a description of the mapping relationship #1, refer to step 914. Details are not described herein again.

The first possible case in step 1512 is used in an example. The SEALDD server determines the mapping relationship #1 based on the received ID of the SEALDD client and the new IP address corresponding to the SEALDD client. The second possible case in step 1512 is used in an example. The SEALDD server detects the N6 tunnel for sending a data packet, and determines the mapping relationship #1.

1514: The SEALDD server transmits data based on the mapping relationship #1.

Optionally, when at least two N6 tunnels are pre-configured between the SEALDD server and the UPF, during data transmission, the SEALDD server may further transmit different data through using different N6 tunnels.

Step 1514 is similar to step 915, and details are not described herein again.

The foregoing describes a possible procedure by using an example with reference to step 1501 to step 1514 shown in FIG. 15. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application. In addition, in addition to the foregoing steps, the method 1500 may further include another step. For example, when configuring a packet detection rule (packet detection rule, PDR) and an associated forwarding action rule (forwarding action rule, FAR) of the UPF, the SMF sets a processing rule for encapsulating and decapsulating a specific data packet and sending the data packet through the N6 tunnel, so that the UPF processes data based on the processing rule.

According to the foregoing technical solution, the N6 tunnel may be pre-configured between the SEALDD server and the UPF. When the UE needs to use the N6 tunnel, the SEALDD server interacts with the SEALDD client and a core network, so that the UE selects a session anchor on the UPF for which the N6 tunnel has been established. For example, the N6 tunnel is pre-configured between the SEALDD server and the UPF. When the UE establishes a session, the session is selected, by using a DNN or S-NSSAI used by the UE, to the UPF for which the N6 tunnel has been established. In addition, the SEALDD server may maintain a mapping relationship among the SEALDD server, the VAL server, the SEALDD client, the VAL client, and the N6 tunnel. In this way, data can be subsequently transmitted based on the mapping relationship.

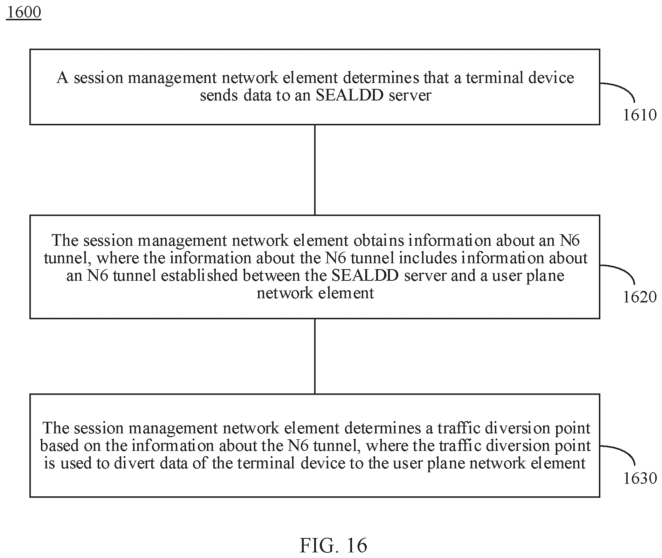

FIG. 16 is a diagram of a communication method 1600 according to another embodiment of this application. The method 1600 may include the following steps.

1610: A session management network element determines that a terminal device sends data to an SEALDD server.

For step 1610, refer to step 1210. Details are not described herein again.

1620: The session management network element obtains information about an N6 tunnel, where the information about the N6 tunnel includes information about an N6 tunnel established between the SEALDD server and a user plane network element.

Optionally, the information about the N6 tunnel includes at least one of the following: N6 tunnel information on an SEALDD server side, port information of a data packet corresponding to the N6 tunnel, and address information of the data packet corresponding to the N6 tunnel. It may be understood that the foregoing is an example for description, and this is not limited herein. For example, the information about the N6 tunnel may further include address information of a user plane network element used for the N6 tunnel and port information of the user plane network element used for the N6 tunnel.

A manner in which the session management network element obtains the information about the N6 tunnel is not limited.

In a possible implementation, the SEALDD server provides the information about the N6 tunnel for the user plane network element.

In another possible implementation, the SEALDD server provides the information about the N6 tunnel for a storage management network element, and the session management network element may query the storage management network element for the information about the N6 tunnel.

1630: The session management network element determines a traffic diversion point based on the information about the N6 tunnel, where the traffic diversion point is used to divert data of the terminal device to the user plane network element.

Optionally, the traffic diversion point is an uplink classifier (uplink classifier, UL CL) or a branching point (branching point, BP).

Optionally, before step 1630, the method 1600 further includes: The session management network element determines the user plane network element based on the information about the N6 tunnel. The traffic diversion point is used to establish a transmission path from the terminal device to the user plane network element, in other words, the transmission path from the terminal device to the user plane network element is established by using the traffic diversion point inserted by the session management network element.

In an example, if the session management network element obtains N6 tunnel information corresponding to at least two user plane network elements in step X1620, that is, N6 tunnels are pre-configured between the SEALDD server and the at least two user plane network elements in step, one user plane network element may be determined based on a location of the terminal device, for example, a user plane network element closest to the terminal device is selected.

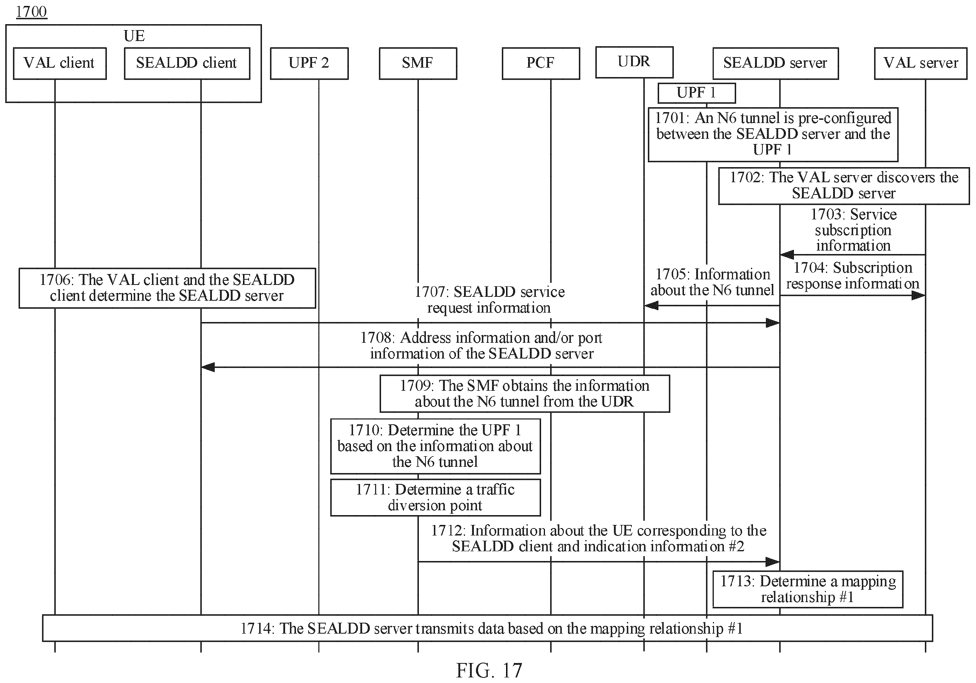

For ease of understanding, the following provides an example description of the embodiment shown in the method 1600 with reference to FIG. 17. In the following example, it is assumed that a user plane network element is a UPF, a session management network element is an SMF, a terminal device is a UE, and an SEALDD client and a VAL client in the UE are separately used for description. For explanations of related steps and related terms, refer to related descriptions in the method 1600. Details are not described herein again.

FIG. 17 is a schematic flowchart of a communication method 1700 according to another embodiment of this application. The method 1700 is applicable to the method 1600, that is, a scenario in which the N6 tunnel is pre-configured between the SEALDD server and the UPF, and the SMF inserts, for the UE, a traffic diversion point of the UPF for which the N6 tunnel has been established. The method 1700 may include the following steps.

1701. An N6 tunnel is pre-configured between the SEALDD server and a UPF 1.

Step 1701 is similar to step 1501. A difference lies in that in the method 1700, an example in which the N6 tunnel is configured between the SEALDD server and the UPF 1 is used for description.

1702: A VAL server discovers the SEALDD server.

1703: The VAL server sends service subscription information to the SEALDD server.

1704: The SEALDD server sends subscription response information to the VAL server.

Step 1702 to step 1704 are similar to step 901 to step 903, and details are not described herein again.

1705: The SEALDD server sends information about the N6 tunnel to a UDR.

The information about the N6 tunnel indicates information about the N6 tunnel established by the SEALDD server and the UPF 1, that is, information about the N6 tunnel pre-configured in step 1701. The information about the N6 tunnel may be used to establish a transmission path from the UE to the UPF 1. For example, a traffic diversion point may be inserted, to forward data of the UE to the UPF 1 by using the traffic diversion point. For details, refer to step 1711 below.

There may be a plurality of N6 tunnels between the SEALDD server and the UPF 1. In this case, the SEALDD server may further send importance information of each N6 tunnel to the UDR.

Optionally, the information about the N6 tunnel includes at least one of the following: address information of the UPF 1 used for the N6 tunnel, port information of the UPF 1 used for the N6 tunnel, port information of the SEALDD server used for the N6 tunnel, address information of the SEALDD server used for the N6 tunnel, port information of a data packet corresponding to the N6 tunnel, and address information of the data packet corresponding to the N6 tunnel.

Optionally, the SEALDD server may further send a data network access identifier (data network access identification, DNAI) to the UDR.

1706: The VAL client and the SEALDD client determine the SEALDD server.

1707: The SEALDD client sends SEALDD service request information to the SEALDD server.

Step 1706 and step 1707 are similar to step 904 and step 905, and details are not described herein again.

1708: The SEALDD server sends address information and/or port information of the SEALDD server to the SEALDD client.

Step 1708 is similar to step 909, and details are not described herein again.

After receiving the address information and/or the port information of the SEALDD server, the SEALDD client may use the address information and/or the port information of the SEALDD server to send data (for example, media data) to the SEALDD server. If the SMF or the UPF detects that the SEALDD client sends data to the SEALDD server, the SMF may obtain the information about the N6 tunnel from the UDR, as shown in step 1709.

1709: The SMF obtains the information about the N6 tunnel from the UDR.

For example, when the SMF detects that the SEALDD client sends media data to the SEALDD server, the SMF obtains the information about the N6 tunnel from the UDR. Alternatively, for another example, when the UPF detects that the SEALDD client sends media data to the SEALDD server, the UPF sends a request to the SMF, and the SMF obtains the information about the N6 tunnel from the UDR based on the request of the UPF.

In an example, that the SMF obtains the information about the N6 tunnel from the UDR may include: The SMF sends a request to a PCF, and the PCF requests the information about the N6 tunnel from the UDR based on the request of the SMF. The UDR sends AF request notification (AF request notification) information to the PCF, and the AF request notification information includes the information about the N6 tunnel. The PCF sends the information about the N6 tunnel to the SMF. For example, that the PCF sends the information about the N6 tunnel to the SMF may include: The PCF sends a session management policy association modification request (SM Policy association modification request) message to the SMF, and the SM policy association modification request message includes the information about the N6 tunnel.

1710: The SMF determines the UPF 1 based on the information about the N6 tunnel.

In an example, if the SMF obtains N6 tunnel information corresponding to at least two UPFs, that is, N6 tunnels are pre-configured between the SEALDD server and the at least two UPFs in step 1701, one UPF may be determined based on a location of the UE, for example, a UPF closest to the UE is selected.

1711: The SMF determines a traffic diversion point.

The traffic diversion point is used to establish the transmission path from the UE to the UPF 1, in other words, the transmission path from the UE to the UPF 1 is established by using the traffic diversion point inserted by the SMF.

Optionally, the traffic diversion point is a UL CL or a BP.

Optionally, the SMF further configures a forwarding rule (forwarding rule). The SMF may configure the forwarding rule, and send the forwarding rule to the traffic diversion point, so that the traffic diversion point may forward data of the UE to the UPF 1 based on the forwarding rule.

1712: The SMF sends, to the SEALDD server, information about the UE corresponding to the SEALDD client and indication information #2.

The indication information #2 may indicate an N6 tunnel corresponding to the UPF 1. The SEALDD server may learn, based on the indication information #2, that the N6 tunnel is between the SEALDD server and the UPF 1. The SMF sends an ID of the SEALDD client and the indication information #2 to the SEALDD server, so that the SEALDD server associates the SEALDD client with the N6 tunnel corresponding to the UPF 1.

In a possible implementation, the indication information #2 is implemented by using at least one bit. For example, it is assumed that in step 1701, an N6 tunnel is established between the SEALDD server and one UPF (namely, the UPF 1), and the indication information #2 is implemented by using one bit. If the bit is set to "0", it indicates that the SEALDD client is not associated with the N6 tunnel corresponding to the UPF 1. If the bit is set to " 1", it indicates that the SEALDD client is associated with the N6 tunnel corresponding to the UPF 1. It should be understood that the foregoing description is merely an example for description, and this is not limited.

In another possible implementation, the indication information #2 is the information about the N6 tunnel between the SEALDD server and the UPF 1. For example, the indication information #2 is the port information and/or the address information of the UPF 1 used for the N6 tunnel. Based on the indication information, the SEALDD server may learn of the N6 tunnel corresponding to the UPF 1, and then associate the SEALDD client with the N6 tunnel corresponding to the UPF 1.

1713: The SEALDD server determines a mapping relationship #1.

The SEALDD server determines the mapping relationship #1 based on the information received in step 1712. The mapping relationship #1 is used to associate the N6 tunnel with the following two connections: a connection between the SEALDD client and the SEALDD server, and a connection between the VAL client and the VAL server.

In a possible form, the mapping relationship #1 indicates a relationship among the SEALDD server, the VAL server, the SEALDD client, the VAL client, and the N6 tunnel.

1714: The SEALDD server transmits data based on the mapping relationship #1.

Step 1714 is similar to step 915, and details are not described herein again.

The foregoing describes a possible procedure by using an example with reference to step 1701 to step 1714 shown in FIG. 17. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application.

According to the foregoing technical solution, the N6 tunnel may be pre-configured between the SEALDD server and the UPF, and notify a core network of the information about the N6 tunnel. When the UE needs to use the N6 tunnel, the SMF inserts, based on the information about the N6 tunnel, a traffic diversion point of the UPF for which the N6 tunnel has been established. For example, after configuring the N6 tunnel with the UPF, the SEALDD server notifies the UDR of the information about the N6 tunnel. When the SEALDD client sends data to the SEALDD server, the SMF may obtain the information about the N6 tunnel from the UDR, and insert the information about the N6 tunnel into the traffic diversion point of the UPF for which the N6 tunnel has been established, so that the transmission path from the UE and the UPF for which the N6 tunnel has been established is established. In addition, the SEALDD server may maintain a mapping relationship among the SEALDD server, the VAL server, the SEALDD client, the VAL client, and the N6 tunnel. In this way, data can be subsequently transmitted based on the mapping relationship.

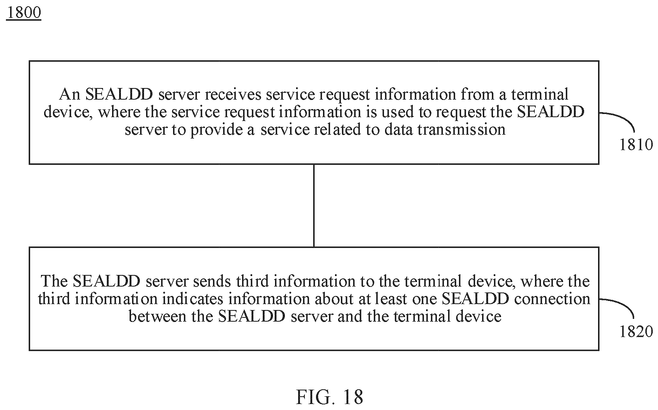

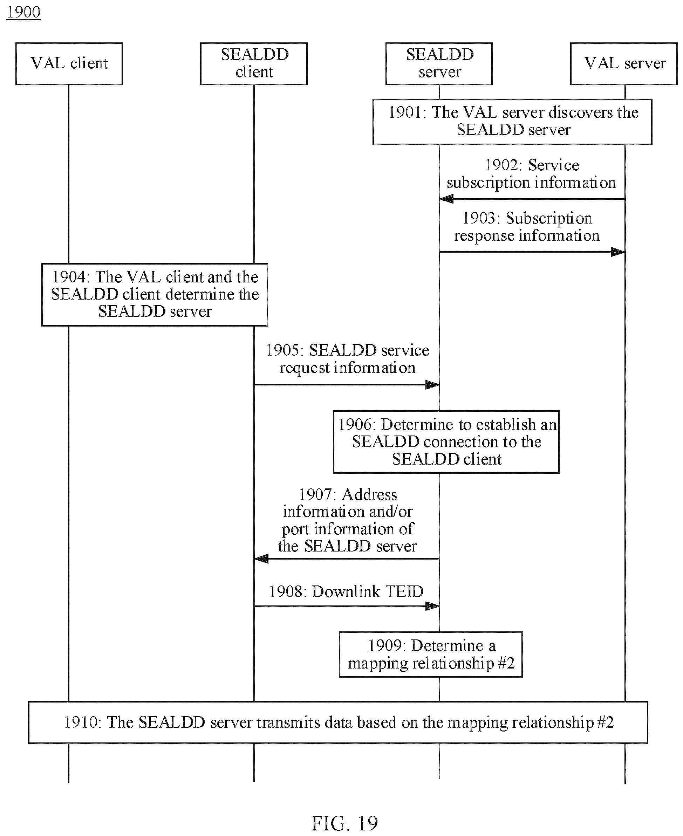

With reference to FIG. 18 and FIG. 19, the following describes a solution applicable to the foregoing solution B, that is, a solution of establishing an SEALDD connection between an SEALDD server and an SEALDD client. The embodiments shown in FIG. 18 and FIG. 19 may be applicable to the network architectures shown in FIG. 1 to FIG. 3, and the embodiment shown in FIG. 13 may be further applicable to the network architecture shown in FIG. 6. This is not limited herein.

FIG. 18 is a diagram of a communication method 1800 according to another embodiment of this application. The method 1800 may include the following steps.

1810: The SEALDD server receives service request information from a terminal device, where the service request information is used to request the SEALDD server to provide a service related to data transmission.

For the service request information, refer to related descriptions in the method 800. Details are not described herein again.

1820: The SEALDD server sends third information to the terminal device, where the third information indicates information about at least one SEALDD connection between the SEALDD server and the terminal device.

In an example, the SEALDD server may establish at least one SEALDD connection to the SEALDD client. Optionally, if there are at least two SEALDD connections between the SEALDD server and the SEALDD client, the SEALDD server may further determine importance information of each SEALDD connection, or referred to as priority information.

In a possible implementation, the SEALDD server may determine, based on a transmission requirement of the terminal device, a quantity of SEALDD connections to be established.

Optionally, the information about the at least one SEALDD connection includes at least one of the following: address information of each SEALDD connection, port information of each SEALDD connection, importance information of each SEALDD connection, and identification information of each SEALDD connection.

The importance information of the SEALDD connection may be used to identify importance of each SEALDD connection. For example, SEALDD connections of different importance may be used to transmit different types of data, for example, data of different importance.

Optionally, the SEALDD server transmits data of an application server with the terminal device on the at least one SEALDD connection based on the mapping relationship #2.

The mapping relationship #2 indicates a relationship among the SEALDD server, the application server, the terminal device, and the at least one SEALDD connection. The mapping relationship #2 is used to associate the SEALDD connection with the terminal device, the SEALDD server, and the application server. In other words, the mapping relationship #2 is used to associate the SEALDD connection with the following two connections: a connection between the SEALDD server and the SEALDD client on the terminal device, and a connection between the VAL server and the VAL client on the terminal device.

In a possible implementation, the mapping relationship #2 is a relationship among the SEALDD server, the VAL server, the SEALDD client on the terminal device, the VAL client on the terminal device, and the SEALDD connection. Optionally, the mapping relationship # further includes ID information of a UE. The ID information of the UE may be address information of the UE, or may be GPSI information or the like.

For ease of understanding, the following provides an example description of the embodiment in the method 1800 with reference to FIG. 19. In the following example, it is assumed that a terminal device is a UE, and an SEALDD client and a VAL client in the UE are separately used for description. For explanations of related steps and related terms, refer to related descriptions in the method 1800. Details are not described herein again.

FIG. 19 is a schematic flowchart of a communication method 1900 according to another embodiment of this application. The method 1900 is applicable to the method 1800, that is, a scenario in which an SEALDD connection is established between the SEALDD server and the SEALDD client. The method 1900 may include the following steps.

1901: The VAL server discovers the SEALDD server.

In an example, the VAL server may discover the SEALDD server through a CAPIF. The VAL server may sense whether the SEALDD server supports a tunnel. Therefore, in a process of discovering the SEALDD server, the VAL server may select the SEALDD server that supports a tunnel. In this embodiment of this application, the tunnel represents a tunnel between the SEALDD server and the SEALDD client, that is, an SEALDD connection.

1902: The VAL server sends service subscription information to the SEALDD server.

The service subscription information may be used to request to subscribe to a tunnel transmission service.

1903: The SEALDD server sends subscription response information to the VAL server.

1904: The VAL client and the SEALDD client determine the SEALDD server.

The VAL client and the SEALDD client may discover and select the SEALDD server, and obtain a control plane API interface of the SEALDD server.

1905: The SEALDD client sends SEALDD service request information to the SEALDD server.

The SEALDD service request information may be used to request the SEALDD server to provide a service, for example, provide a service related to data transmission. The SEALDD service request may also be referred to as, for example, an SEALDD service trigger request (SEALDD service trigger request), and a name of the SEALDD service request does not limit the protection scope of embodiments of this application.

In an example, the SEALDD client sends the SEALDD service request information to the SEALDD server through the control plane API interface of the SEALDD server.

Optionally, the SEALDD service request information includes VAL service information. The VAL service information may be used by the SEALDD server to determine whether to use the tunnel to transmit a service data stream. For example, if the SEALDD server determines, based on the VAL service information, that the VAL server has subscribed to an SEALDD service, the SEALDD server determines to transmit, through the tunnel, data of a service provided by the VAL server. If the SEALDD server determines to transmit, through the tunnel, the data of the service provided by the VAL server, the SEALDD server determines to establish a connection to the SEALDD client, as shown in step 1906. For differentiation, the connection between the SEALDD server and the SEALDD client is recorded as an SEALDD connection.

1906: The SEALDD server determines to establish an SEALDD connection to the SEALDD client.

In an example, the SEALDD server may determine, based on a transmission requirement of the VAL server, a quantity of SEALDD connections to be established with the SEALDD client. Optionally, if there are at least two SEALDD connections between the SEALDD server and the SEALDD client, the SEALDD server may further determine importance information of each SEALDD connection, or referred to as priority information.

1907: The SEALDD server sends address information and/or port information of the SEALDD server to the SEALDD client.

The address information of the SEALDD server is address information of the SEALDD server used for the SEALDD connection, that is, address information of the SEALDD server corresponding to the SEALDD connection. The port information of the SEALDD server is port information of the SEALDD server used for the SEALDD connection, that is, port information of the SEALDD server corresponding to the SEALDD connection.

In a possible implementation, the SEALDD server sends SEALDD service response information to the SEALDD client, and the SEALDD service response information includes the address information and/or the port information of the SEALDD server.

Optionally, if there are at least two SEALDD connections between the SEALDD server and the SEALDD client, the SEALDD server may further send importance information of each SEALDD connection to the SEALDD client.

Optionally, if the SEALDD connection uses a tunneling protocol such as GTP-U, the SEALDD server may further send an uplink (uplink) TEID to the SEALDD client.

Optionally, if the SEALDD connection uses a tunneling protocol such as GTP-U, the SEALDD client sends a downlink (downlink) TEID to the SEALDD server, as shown in step 1908.

1908: The SEALDD client sends the downlink TEID to the SEALDD server.

In a possible implementation, the SEALDD client sends an SEALDD service tunnel establishment (SEALDD service tunnel establishment) message to the SEALDD server, and the message includes the downlink TEID. Further, optionally, the SEALDD server may send an SEALDD service tunnel establishment response (SEALDD service tunnel establishment response) message to the SEALDD client.

After the SEALDD server receives the downlink TEID sent by the SEALDD client, the SEALDD connection between the SEALDD server and the SEALDD client is established. Optionally, after the SEALDD connection between the SEALDD server and the SEALDD client is established, the SEALDD server may further send notification information to a core network. The notification information indicates a UPF to read a header of a data packet transmitted on the SEALDD connection.

It may be understood that, if the SEALDD connection uses another protocol that can establish a connection through user plane interaction, step 1908 may not be performed.

1909: The SEALDD server determines a mapping relationship #2.

For the mapping relationship #2, refer to related descriptions in the method 1800. Details are not described herein again.

1910: The SEALDD server transmits data based on the mapping relationship #2.

Downlink transmission is used in an example, to be specific, the VAL server sends data to the VAL client by using the SEALDD server and the SEALDD client. For example, the VAL server sends a data packet to the SEALDD server, and the SEALDD server determines, based on an address and/or a port corresponding to the data packet, a VAL client corresponding to the data packet. The address corresponding to the data packet may be, for example, a source address and/or a destination address of the data packet, and the port corresponding to the data packet may be, for example, a source port and/or a destination port of the data packet. After determining the VAL client corresponding to the data packet, the SEALDD server determines a corresponding SEALDD connection based on the VAL client and the mapping relationship #2. The SEALDD server adds feature information of the data packet to a header of the data packet, and sends the data packet to the UPF through the SEALDD connection. After receiving the data packet, the UPF reads the feature information of the data packet in the header of the data packet, copies and adds the feature information to an N3 GTP-U tunnel header, and sends the N3 GTP-U tunnel header to a RAN. After receiving the data from the UPF, the RAN may perform optimized transmission based on the feature information of the data packet in the N3 GTP-U tunnel header, and send the data to the SEALDD client, so that the SEALDD client sends the data to the VAL client. For a form of the data packet in a transmission process, refer to the form shown in FIG. 7.

The foregoing describes a possible procedure by using an example with reference to step 1901 and step 1910 shown in FIG. 19. It should be understood that the foregoing steps are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application.

According to the foregoing technical solution, an end-to-end tunnel, that is, the SEALDD connection, may be established between the SEALDD server and the SEALDD client. In addition, after the SEALDD connection is established, the SEALDD server may maintain a mapping relationship among the SEALDD server, the VAL server, the SEALDD client, the VAL client, and the SEALDD connection. In this way, data can be subsequently transmitted based on the mapping relationship.

It may be understood that the examples in FIG. 8 to FIG. 19 in embodiments of this application are merely intended to help a person skilled in the art understand embodiments of this application, but are not intended to limit embodiments of this application to specific scenarios in the examples. A person skilled in the art may apparently make various equivalent modifications or changes based on the examples shown in FIG. 8 to FIG. 19, and such modifications or changes also fall within the scope of embodiments of this application.

It may be further understood that, in some of the foregoing embodiments, a solution of establishing the N6 tunnel between the UPF and the SEALDD server is mentioned. For example, the SEALDD server provides N6 tunnel information (for example, a TEID on the SEALDD server side) on the SEALDD server side, and the UPF or the SMF provides N6 tunnel information (for example, a TEID on a UPF side) on the UPF side, so that the SEALDD server and the UPF complete establishment of the N6 tunnel. It may be understood that the SEALDD server may also be replaced with another application server.

For example, the AF sends N6 tunnel information on an application server side (for example, a TEID on the application server side) to the SMF by using a core network element (for example, an NEF/PCF), and the SMF may send the N6 tunnel information on the application server side to the UPF. The SMF feeds back the N6 tunnel information on the UPF side (for example, the TEID on the UPF side), so that the N6 tunnel is established between the application server and the UPF. The SMF may obtain the N6 tunnel information on the UPF side from the UPF, or may allocate the N6 tunnel information on the UPF side by itself. This is not limited. The application server may be an SEALDD server, and the AF may also be an SEALDD server.

For another example, the application server sends an AF request by using a network element (for example, denoted as a network element #A), for example, network resource management (network resource management, NRM). The network element #A sends N6 tunnel information on an application server side (for example, a TEID on the application server side) to the SMF by using the core network element (for example, an NEF/PCF). The SMF may send the N6 tunnel information on the application server side to the UPF. The SMF feeds back the N6 tunnel information on a UPF side (for example, a TEID on the UPF side). In this way, the application server and the UPF complete establishment of the N6 tunnel. The SMF may alternatively feed back the N6 tunnel information on the UPF side to the outside of the core network by using the NEF. The N6 tunnel information on the UPF side fed back by the SMF may be sent to the SEALDD server by using the network element #A. The SMF may obtain the N6 tunnel information on the UPF side from the UPF, or may allocate the N6 tunnel information on the UPF side by itself. This is not limited. The application server may be an SEALDD server, and the AF may also be an SEALDD server.

It may be further understood that in embodiments of this application, interaction between the SELADD server and the core network may be implemented by using the network element #A. In an example, the network element #A may be NRM.

It may be further understood that in this specification, the term "and/or" describes only an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

It may be further understood that, for ease of understanding, the core network elements such as the UPF, the SMF, and the UDR are separately shown in the accompanying drawings. However, this shall not constitute any limitation on this application. A specific form of the core network element is not limited in this application.

It may be further understood that the foregoing describes embodiments with reference to FIG. 8 to FIG. 19. It may be understood that, for parts that are not described in detail in embodiments, reference may be made to each other.

It may be further understood that in some of the foregoing embodiments, the SEALDD server is mainly used in an example for description. This is not limited herein. For example, the SEALDD server can be replaced with another application server.

It may be further understood that some message names in embodiments of this application do not limit the protection scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited herein.

It may be further understood that, in the foregoing method embodiments, the method and the operation implemented by the device or the network element may alternatively be implemented by a component (such as a chip or a circuit) of the device or the network element. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

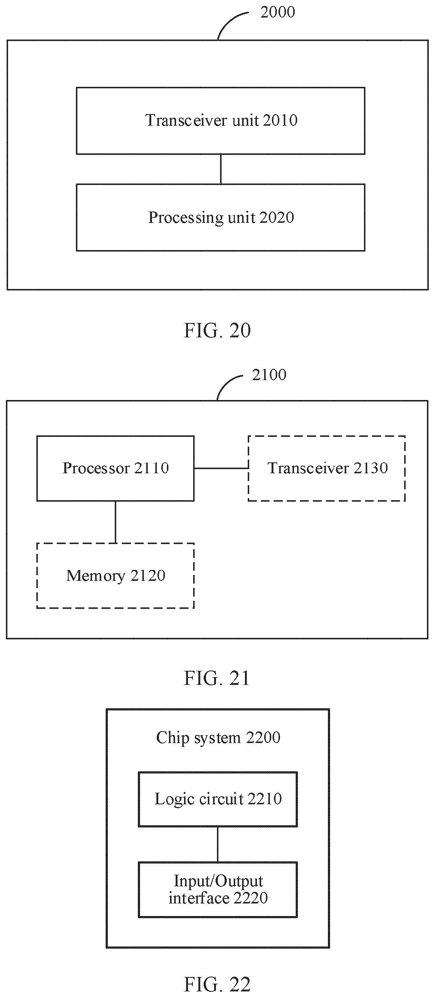

FIG. 20 is a block diagram of a communication apparatus 2000 according to an embodiment of this application. The apparatus 2000 includes one or more virtual units, such as a transceiver unit 2010 and a processing unit 2020. The transceiver unit 2010 may be configured to implement a corresponding communication function. The transceiver unit 2010 may also be referred to as a communication interface or a communication unit. The processing unit 2020 may be configured to implement a corresponding processing function, for example, establishing an N6 tunnel.

Optionally, the apparatus 2000 further includes a storage unit. The storage unit may be configured to store instructions and/or data. The processing unit 2020 may read the instructions and/or the data in the storage unit, to enable the apparatus to implement actions of a device or a network element in the foregoing method embodiments.

In a first design, the apparatus 2000 may be the SEALDD server in the foregoing embodiment, or may be a component (for example, a chip) of the SEALDD server. The apparatus 2000 may implement steps or procedures that are corresponding to the SEALDD server in the foregoing method embodiments. The transceiver unit 2010 may be configured to perform sending-and receiving-related operations of the SEALDD server in the foregoing method embodiments, for example, sending-and receiving-related operations of the SEALDD server in the embodiments shown in FIG. 8 to FIG. 19. The processing unit 2020 may be configured to perform processing-related operations of the SEALDD server in the foregoing method embodiments, for example, processing-related operations of the SEALDD server in the embodiments shown in FIG. 8 to FIG. 19.

In a second design, the apparatus 2000 may be the user plane network element in the foregoing embodiment, or may be a component (for example, a chip) of the user plane network element. The apparatus 2000 may implement the steps or procedures performed by the user plane network element in the foregoing method embodiments. The transceiver unit 2010 may be configured to perform receiving-and sending-related operations of the user plane network element in the foregoing method embodiments, for example, receiving-and sending-related operations of the user plane network element in the embodiments shown in FIG. 8, FIG. 10, FIG. 12, FIG. 14, FIG. 16, and FIG. 18, or receiving-and sending-related operations of the UPF in the embodiments shown in FIG. 9, FIG. 11, FIG. 13, FIG. 15, FIG. 17, and FIG. 19. The processing unit 2020 may be configured to perform processing-related operations of the user plane network element in the foregoing method embodiments, for example, processing-related operations of the user plane network element in the embodiments shown in FIG. 8, FIG. 10, FIG. 12, FIG. 14, FIG. 16, and FIG. 18, or processing-related operations of the UPF in the embodiments shown in FIG. 9, FIG. 11, FIG. 13, FIG. 15, FIG. 17, and FIG. 19.

In a third design, the apparatus 2000 may be the session management network element in the foregoing embodiment, or may be a component (for example, a chip) of the session management network element. The apparatus 2000 may implement steps or procedures that are corresponding to the session management network element in the foregoing method embodiments. The transceiver unit 2010 may be configured to perform receiving-and sending-related operations of the session management network element in the foregoing method embodiments, for example, receiving-and sending-related operations of the session management network element in the embodiments shown in FIG. 8, FIG. 10, FIG. 12, FIG. 14, FIG. 16, and FIG. 18, or receiving-and sending-related operations of the SMF in the embodiments shown in FIG. 9, FIG. 11, FIG. 13, FIG. 15, FIG. 17, and FIG. 19. The processing unit 2020 may be configured to perform processing-related operations of the session management network element in the foregoing method embodiments, for example, processing-related operations of the session management network element in the embodiments shown in FIG. 8, FIG. 10, FIG. 12, FIG. 14, FIG. 16, and FIG. 18, or processing-related operations of the SMF in the embodiments shown in FIG. 9, FIG. 11, FIG. 13, FIG. 15, FIG. 17, and FIG. 19.

In a fourth design, the apparatus 2000 may be the terminal device in the foregoing embodiment, or may be a component (for example, a chip) of the terminal device. The apparatus 2000 may implement the steps or procedures performed by the terminal device in the foregoing method embodiments. The transceiver unit 2010 may be configured to perform receiving-and sending-related operations of the terminal device in the foregoing method embodiments, for example, receiving-and sending-related operations of the terminal device in the embodiments shown in FIG. 8, FIG. 10, FIG. 12, FIG. 14, FIG. 16, and FIG. 18, or receiving-and sending-related operations of the VAL client and the SEALDD client in the embodiments shown in FIG. 9, FIG. 11, FIG. 13, FIG. 15, FIG. 17, and FIG. 19. The processing unit 2020 may be configured to perform processing-related operations of the terminal device in the foregoing method embodiments, for example, processing-related operations of the terminal device in the embodiments shown in FIG. 8, FIG. 10, FIG. 12, FIG. 14, FIG. 16, and FIG. 18, or processing-related operations of the VAL client and the SEALDD client in the embodiments shown in FIG. 9, FIG. 11, FIG. 13, FIG. 15, FIG. 17, and FIG. 19.

It should be understood that specific processes of performing the corresponding steps by various units have been detailed in the foregoing method embodiments. For brevity, details are not described herein again.

It should be understood that the apparatus 2000 herein is embodied in a form of a functional unit. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

For example, a product implementation form of the apparatus 2000 provided in this embodiment of this application is program code that can be run on a computer.

For example, the apparatus 2000 provided in this embodiment of this application may be a communication device, or may be a chip, a chip system (for example, a system on chip (system on chip, SoC)), or a circuit used in the communication device. When the apparatus 2000 is the communication device, the transceiver unit 2010 may be a transceiver or an input/output interface, and the processing unit 2020 may be a processor. When the apparatus 2000 is the chip, the chip system, or the circuit used in the communication device, the transceiver unit 2010 may be an input/output interface, an interface circuit, an output circuit, an input circuit, a pin, a related circuit, or the like on the chip, the chip system, or the circuit; and the processing unit 2020 may be a processor, a processing circuit, a logic circuit, or the like.

In addition, the transceiver unit 2010 may alternatively be a transceiver circuit (for example, may include a receiving circuit and a sending circuit), and the processing unit may be a processing circuit.

FIG. 21 is a block diagram of a communication apparatus 2100 according to an embodiment of this application. The apparatus 2100 includes a processor 2110, and the processor 2110 is coupled to a memory 2220. Optionally, the apparatus further includes the memory 2220, configured to store a computer program or instructions and/or data. The processor 2110 is configured to execute the computer program or the instructions stored in the memory 2220, or read the data stored in the memory 2220, to perform the methods in the foregoing method embodiments.

Optionally, there are one or more processors 2110.

Optionally, there are one or more memories 2220.

Optionally, the memory 2220 and the processor 2110 are integrated together, or are disposed separately.

Optionally, as shown in FIG. 21, the apparatus 2100 further includes a transceiver 2130, and the transceiver 2130 is configured to: receive and/or send a signal. For example, the processor 2110 is configured to control the transceiver 2130 to receive and/or send a signal.

In a solution, the apparatus 2100 is configured to implement operations performed by the SEALDD server in the foregoing method embodiments.

For example, the processor 2110 is configured to execute the computer program or the instructions stored in the memory 2220, to implement related operations of the SEALDD server in the foregoing method embodiments, for example, the method performed by the SEALDD server in the embodiments shown in FIG. 8 to FIG. 19.

In another solution, the apparatus 2100 is configured to implement operations performed by the user plane function network element in the foregoing method embodiments.

For example, the processor 2110 is configured to execute the computer program or the instructions stored in the memory 2220 to implement related operations of the user plane network element in the foregoing method embodiments, for example, the method performed by the user plane network element in the embodiments shown in FIG. 8, FIG. 10, FIG. 12, FIG. 14, FIG. 16, and FIG. 18, and for another example, the method performed by the UPF in the embodiments shown in FIG. 9, FIG. 11, FIG. 13, FIG. 15, FIG. 17, and FIG. 19.

In another solution, the apparatus 2100 is configured to implement operations performed by the session management network element in the foregoing method embodiments.

For example, the processor 2110 is configured to execute the computer program or the instructions stored in the memory 2220, to implement related operations of the session management network element in the foregoing method embodiments, for example, the method performed by the session management network element in the embodiments shown in FIG. 8, FIG. 10, FIG. 12, FIG. 14, FIG. 16, and FIG. 18, and for another example, the method performed by the SMF in the embodiments shown in FIG. 9, FIG. 11, FIG. 13, FIG. 15, FIG. 17, and FIG. 19.

In another solution, the apparatus 2100 is configured to implement operations performed by the terminal device in the foregoing method embodiments.

For example, the processor 2110 is configured to execute the computer program or the instructions stored in the memory 2220, to implement related operations of the terminal device in the foregoing method embodiments, for example, the method performed by the terminal device in the embodiments shown in FIG. 8, FIG. 10, FIG. 12, FIG. 14, FIG. 16, and FIG. 18, and for another example, the method performed by the VAL client and the SEALDD client in the embodiments shown in FIG. 9, FIG. 11, FIG. 13, FIG. 15, FIG. 17, and FIG. 19.

In an implementation process, the steps of the foregoing method may be performed by using an integrated logic circuit of hardware in the processor 2110 or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 2220. The processor 2110 reads information from the memory 2220, and performs the steps of the foregoing method in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 2110) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application specific integrated circuit (application specific integrated circuit, ASIC), a field programmable gate array (field programmable gate array, FPGA), a programmable logic device (programmable logic device, PLD), gating logic, transistor logic, a discrete hardware circuit, a processing circuit, or another proper combination of hardware, firmware, and/or hardware and software, and is configured to perform various functions described in this disclosure. The processor may be a general-purpose processor or a special-purpose processor. For example, the processor 2110 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes: program code, a program, a subprogram, instructions, an instruction set, code, a code segment, a software module, an application, a software application, or the like. The program may be run in a processor and/or a computer, to enable the apparatus to perform various functions and/or processes described in this application.

The memory (for example, the memory 2220) may store data required by the processor (for example, the processor 2110) during software execution. The memory may be implemented by using any suitable storage technology. For example, the memory may be any available storage medium that can be accessed by a processor and/or a computer. A non-limitative example of the storage media includes: a random access memory (random access memory, RAM), a read-only memory (read-only memory, ROM), an electrically erasable programmable read-only memory (electrically EPROM, EEPROM), a compact disc read-only memory (Compact Disc ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable media, an optical disc storage, a magnetic disk storage media, a magnetic storage device, a flash memory, a register, a state storage, a remote mounted storage, a local or remote storage component, or any other medium capable of carrying or storing software, data, or information and accessible by a processor/computer. It should be noted that the memory described in this specification aims to include but is not limited to these memories and any memory of another appropriate type.

The memory (for example, the memory 2220) and the processor (for example, the processor 2110) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in a UE or another network node).

FIG. 22 is a block diagram of a chip system 2200 according to an embodiment of this application. The chip system 2200 (or may be referred to as a processing system) includes a logic circuit 2210 and an input/output interface (input/output interface) 2220.

The logic circuit 2210 may be a processing circuit in the chip system 2200. The logic circuit 2210 may be coupled and connected to a storage unit, and invoke instructions in the storage unit, so that the chip system 2200 can implement the methods and functions in embodiments of this application. The input/output interface 2220 may be an input/output circuit in the chip system 2200, and outputs information processed by the chip system 2200, or inputs to-be-processed data or signaling information to the chip system 2200 for processing.

In a solution, the chip system 2200 is configured to implement operations performed by the control plane network element in the foregoing method embodiments.

For example, the logic circuit 2210 is configured to implement processing-related operations performed by the SEALDD server in the foregoing method embodiments, for example, processing-related operations performed by the SEALDD server in the embodiments shown in FIG. 8 to FIG. 19. The input/output interface 2220 is configured to implement sending-and/or receiving-related operations performed by the SEALDD server in the foregoing method embodiments, for example, sending-and/or receiving-related operations performed by the SEALDD server in the embodiments shown in FIG. 8 to FIG. 19.

In another solution, the chip system 2200 is configured to implement operations performed by the user plane network element in the foregoing method embodiments.

For example, the logic circuit 2210 is configured to implement processing-related operations performed by the user plane network element in the foregoing method embodiments, for example, processing-related operations performed by the user plane network element in the embodiments shown in FIG. 8, FIG. 10, FIG. 12, FIG. 14, FIG. 16, and FIG. 18, or processing-related operations performed by the UPF in the embodiments shown in FIG. 9, FIG. 11, FIG. 13, FIG. 15, FIG. 17, and FIG. 19. The input/output interface 2220 is configured to implement sending-and/or receiving-related operations performed by the user plane network element in the foregoing method embodiments, for example, sending-and/or receiving-related operations performed by the user plane network element in the embodiments shown in FIG. 8, FIG. 10, FIG. 12, FIG. 14, FIG. 16, and FIG. 18, or sending-and/or receiving-related operations performed by the UPF in the embodiments shown in FIG. 9, FIG. 11, FIG. 13, FIG. 15, FIG. 17, and FIG. 19.

In another solution, the chip system 2200 is configured to implement operations performed by the session management network element in the foregoing method embodiments.

For example, the logic circuit 2210 is configured to implement processing-related operations performed by the session management network element in the foregoing method embodiments, for example, processing-related operations performed by the session management network element in the embodiments shown in FIG. 8, FIG. 10, FIG. 12, FIG. 14, FIG. 16, and FIG. 18, or processing-related operations performed by the SMF in the embodiments shown in FIG. 9, FIG. 11, FIG. 13, FIG. 15, FIG. 17, and FIG. 19. The input/output interface 2220 is configured to implement sending-and/or receiving-related operations performed by the user plane network element in the foregoing method embodiments, for example, sending-and/or receiving-related operations performed by the session management network element in the embodiments shown in FIG. 8, FIG. 10, FIG. 12, FIG. 14, FIG. 16, and FIG. 18, or sending-and/or receiving-related operations performed by the SMF in the embodiments shown in FIG. 9, FIG. 11, FIG. 13, FIG. 15, FIG. 17, and FIG. 19.

An embodiment of this application further provides a computer-readable storage medium. The computer-readable storage medium stores computer instructions used to implement the method performed by the communication apparatus (for example, the SEALDD server, or the user plane network element, or the session management network element, or the terminal device) in the foregoing method embodiments.

An embodiment of this application further provides a computer program product, including instructions. When the instructions are executed by a computer, the method performed by the communication apparatus (for example, the SEALDD server, or the user plane network element, or the session management network element, or the terminal device) in the foregoing method embodiments is implemented.

An embodiment of this application further provides a communication system. The communication system includes one or more of the SEALDD server, the user plane network element, the session management network element, and the terminal device in the foregoing embodiments.

For explanations of related content and beneficial effects of any apparatus provided above, refer to the corresponding method embodiments provided above. Details are not described herein again.

In the several embodiments provided in this application, it should be understood that the disclosed apparatus and method may be implemented in other manners. For example, the foregoing apparatus embodiments are only examples. For example, division into the foregoing units is only logical function division, and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a service enabler architecture layer data delivery SEALDD server, service request information from a terminal device, wherein the service request information is used to request the SEALDD server to provide a service related to data transmission; and
in response to the service request information, transmitting, by the SEALDD server, data of the terminal device to a user plane network element through an N6 tunnel, wherein the N6 tunnel is established based on first information and second information, the first information comprises information provided by the SEALDD server for establishing the N6 tunnel, and the second information comprises information provided by the user plane network element for establishing the N6 tunnel.

2. The method according to claim 1, wherein the method further comprises:
sending, by the SEALDD server, the first information to the user plane network element, wherein the first information is used to trigger the user plane network element to establish the N6 tunnel; and
in response to the first information, transmitting, by the user plane network element, the data of the terminal device to the SEALDD server through the N6 tunnel.

3. The method according to claim 2, wherein the sending, by the SEALDD server, the first information to the user plane network element comprises: sending, by the SEALDD server, the first information to the user plane network element when the SEALDD server determines, based on the service request information, to transmit the data of the terminal device on the N6 tunnel.

4. The method according to any one of claims 1 to 3, wherein the method further comprises:
sending, by the SEALDD server, address information of the SEALDD server and/or port information of the SEALDD server to the terminal device.

5. The method according to any one of claims 1 to 4, wherein the transmitting, by the SEALDD server, data of the terminal device to a user plane network element through an N6 tunnel comprises:
receiving, by the SEALDD server, a first data packet from an application server; and
sending, by the SEALDD server, the first data packet to the user plane network element through the N6 tunnel based on address information and/or port information of the first data packet and a mapping relationship, wherein
the mapping relationship indicates a relationship among the SEALDD server, the application server, the terminal device, and the N6 tunnel.

6. The method according to claim 5, wherein the first data packet comprises feature information of the first data packet.

7. The method according to any one of claims 1 to 4, wherein the transmitting, by the SEALDD server, data of the terminal device to a user plane network element through an N6 tunnel comprises:
receiving, by the SEALDD server, a second data packet from the user plane network element through the N6 tunnel; and
sending, by the SEALDD server, the second data packet to an application server based on address information and/or port information of the second data packet, the N6 tunnel, and a mapping relationship, wherein
the mapping relationship indicates a relationship among the SEALDD server, the application server, the terminal device, and the N6 tunnel.

8. The method according to claim 7, wherein the second data packet comprises feature information of the second data packet.

9. A communication method, comprising:
receiving, by a user plane network element, first information from a service enabler architecture layer data delivery SEALDD server, wherein the first information is used to trigger the user plane network element to establish an N6 tunnel, the N6 tunnel is established based on the first information and second information, the first information comprises information provided by the SEALDD server for establishing the N6 tunnel, and the second information comprises information provided by the user plane network element for establishing the N6 tunnel; and
in response to the first information, transmitting, by the user plane network element, data of a terminal device to the SEALDD server through the N6 tunnel.

10. The method according to claim 9, wherein the transmitting, by the user plane network element, data of the terminal device to the SEALDD server through the N6 tunnel comprises:
receiving, by the user plane network element from the SEALDD server, a first data packet from an application server through the N6 tunnel; and
sending, by the user plane network element, the first data packet to the terminal device based on address information and/or port information of the first data packet and a mapping relationship, wherein
the mapping relationship indicates a relationship among the SEALDD server, the application server, the terminal device, and the N6 tunnel.

11. The method according to claim 10, wherein the first data packet comprises feature information of the first data packet.

12. The method according to any one of claims 9 to 11, wherein the transmitting, by the user plane network element, data of the terminal device to the SEALDD server through the N6 tunnel comprises:
receiving, by the user plane network element, a second data packet from the terminal device; and
sending, by the user plane network element, the second data packet to the application server through the SEALDD server based on address information and/or port information of the second data packet, the N6 tunnel, and the mapping relationship, wherein
the mapping relationship indicates the relationship among the SEALDD server, the application server, the terminal device, and the N6 tunnel.

13. The method according to claim 12, wherein the second data packet comprises feature information of the second data packet.

14. The method according to any one of claims 1 to 13, wherein the first information comprises at least one of the following: information about the terminal device, routing information of the N6 tunnel, address information of the SEALDD server, port information of the SEALDD server, or a tunnel endpoint identifier of the N6 tunnel on an SEALDD server side.

15. The method according to any one of claims 1 to 14, wherein the second information comprises at least one of the following: address information of the user plane network element, port information of the user plane network element, and a tunnel endpoint identifier of the N6 tunnel on a user plane network element side.

16. The method according to any one of claims 1 to 15, wherein the first information comprises information provided by the SEALDD server for establishing at least two N6 tunnels, the at least two N6 tunnels are N6 tunnels between the SEALDD server and the user plane network element, and the at least two N6 tunnels are used to transmit different types of data of the terminal device.

17. The method according to claim 16, wherein the first information comprises importance information corresponding to each N6 tunnel.

18. A communication method, comprising:
determining, by a session management network element, second information, wherein the second information comprises information provided by a user plane network element for establishing an N6 tunnel, the N6 tunnel is an N6 tunnel between a service enabler architecture layer data delivery SEALDD server and the user plane network element, and the N6 tunnel is used to transmit data of a terminal device; and
sending, by the session management network element, the second information to the SEALDD server, wherein the second information is used to trigger the SEALDD server to establish the N6 tunnel.

19. The method according to claim 18, wherein the method further comprises:
receiving, by the session management network element, first information from the SEALDD server, wherein the first information comprises information provided by the SEALDD server for establishing the N6 tunnel, and the first information is used to trigger the user plane network element to establish the N6 tunnel.

20. The method according to claim 19, wherein the first information comprises at least one of the following: information about the terminal device, routing information of the N6 tunnel, address information of the SEALDD server, port information of the SEALDD server, and a tunnel endpoint identifier of the N6 tunnel on an SEALDD server side.

21. The method according to any one of claims 18 to 20, wherein the determining, by a session management network element, second information comprises:
allocating, by the session management network element, the second information to the user plane network element; or
receiving, by the session management network element, the second information from the user plane network element.

22. The method according to any one of claims 18 to 21, wherein the second information comprises at least one of the following: address information of the user plane network element, port information of the user plane network element, and a tunnel endpoint identifier of the N6 tunnel on a user plane network element side.

23. A communication method, comprising:
receiving, by a service enabler architecture layer data delivery SEALDD server, service request information from a terminal device, wherein the service request information is used to request the SEALDD server to provide a service related to data transmission; and
when the SEALDD server determines that an N6 tunnel is not established between the SEALDD server and a user plane network element, sending, by the SEALDD server, first information to the user plane network element, wherein the first information is information provided by the SEALDD server for establishing the N6 tunnel, the user plane network element is a user plane network element that provides a service for the terminal device, and the first information is used to trigger the user plane network element to establish the N6 tunnel.

24. A communication method, comprising:
receiving, by a service enabler architecture layer data delivery SEALDD server, a first data packet from an application server;
sending, by the SEALDD server, the first data packet to a user plane network element through an N6 tunnel; and
sending, by the user plane network element, the first data packet to a terminal device.

25. The method according to claim 24, wherein the sending, by the SEALDD server, the first data packet to a user plane network element through an N6 tunnel comprises:
sending, by the SEALDD server, the first data packet to the user plane network element through the N6 tunnel based on address information and/or port information of the first data packet and a mapping relationship, wherein the mapping relationship indicates a relationship among the SEALDD server, the application server, the terminal device, and the N6 tunnel.

26. A communication apparatus, wherein the apparatus comprises a unit configured to perform the method according to any one of claims 1 to 8, or a unit configured to perform the method according to any one of claims 9 to 14, or a unit configured to perform the method according to any one of claims 18 to 22, or a unit configured to perform the method according to claim 23, or a unit configured to perform the method according to claim 24 or 25.

27. A communication apparatus, comprising:
a processor, configured to execute a computer program stored in a memory, to enable the apparatus to perform the method according to any one of claims 1 to 8, or enable the apparatus to perform the method according to any one of claims 9 to 17, or enable the apparatus to perform the method according to any one of claims 18 to 22, or enable the apparatus to perform the method according to claim 23, or enable the apparatus to perform the method according to claim 24 or 25.

28. The apparatus according to claim 27, wherein the apparatus further comprises the memory and/or a communication interface, and the communication interface is coupled to the processor; and
the communication interface is configured to input and/or output information.

29. The apparatus according to claim 27 or 28, wherein the apparatus is any one of the following: a chip, a chip system, or a circuit.

30. A computer-readable storage medium, wherein the computer-readable storage medium stores a computer program, and when the computer program runs on a computer, the computer is enabled to perform the method according to any one of claims 1 to 8, or the computer is enabled to perform the method according to any one of claims 9 to 17, or the computer is enabled to perform the method according to any one of claims 18 to 22, or the computer is enabled to perform the method according to claim 23, or the computer tis enabled to perform the method according to claim 24 or 25.

31. A computer program product, wherein the computer program product comprises instructions used to perform the method according to any one of claims 1 to 8, or the computer program product comprises instructions used to perform the method according to any one of claims 9 to 17, or the computer program product comprises instructions used to perform the method according to any one of claims 18 to 22, or the computer program product comprises instructions used to perform the method according to claim 23, or the computer program product comprises instructions used to perform the method according to claim 24 or 25.

32. A communication system, comprising a service enabler architecture layer data delivery SEALDD server and a user plane network element, wherein
the SEALDD server is configured to perform the method according to any one of claims 1 to 8; and
the user plane network element is configured to perform the method according to any one of claims 9 to 17.

33. The communication system according to claim 32, wherein the communication system further comprises a session management network element, and the session management network element is configured to perform the method according to any one of claims 18 to 22.

34. A communication system, comprising a service enabler architecture layer data delivery SEALDD server and a user plane network element, wherein
the SEALDD server and the user plane network element are configured to perform the method according to claim 24 or 25.
